(19) **Europäisches Patentamt / European Patent Office / Office européen des brevets**

(11) **EP 2 799 567 B1**

(12) # EUROPEAN PATENT SPECIFICATION

(45) Date of publication and mention of the grant of the patent:
**03.07.2019 Bulletin 2019/27**

(51) Int Cl.:
*C22C 38/04* [(2006.01)]    *B21B 3/00* [(2006.01)]
*B23K 9/025* [(2006.01)]    *B23K 9/23* [(2006.01)]
*B23K 31/00* [(2006.01)]    *C21D 9/08* [(2006.01)]
*C21D 9/50* [(2006.01)]    *C22C 38/58* [(2006.01)]
*B23K 103/04* [(2006.01)]    *C21D 8/02* [(2006.01)]
*F16L 9/02* [(2006.01)]    *C21D 6/00* [(2006.01)]

(21) Application number: **12861113.4**

(22) Date of filing: **27.12.2012**

(86) International application number:
**PCT/JP2012/083994**

(87) International publication number:
**WO 2013/100106 (04.07.2013 Gazette 2013/27)**

(54) **HIGH-STRENGTH STEEL PLATE AND HIGH-STRENGTH STEEL PIPE EXCELLENT IN DEFORMABILITY AND LOW-TEMPERATURE TOUGHNESS, AND MANUFACTURING METHOD OF THE STEEL PLATE**

HOCHFESTE STAHLPLATTE UND HOCHFESTES STAHLROHR MIT HERVORRAGENDER VERFORMBARKEIT UND TIEFTEMPERATURZÄHIGKEIT UND VERFAHREN ZUR HERSTELLUNG DER STAHLPLATTE

PLAQUE D'ACIER DE RÉSISTANCE ÉLEVÉE ET TUYAU EN ACIER DE RÉSISTANCE ÉLEVÉE D'EXCELLENTES APTITUDE À LA DÉFORMATION ET TÉNACITÉ À BASSE TEMPÉRATURE ET PROCÉDÉ DE FABRICATION DE LA PLAQUE D'ACIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2011 JP 2011287752**
           **28.12.2011 JP 2011287699**

(43) Date of publication of application:
**05.11.2014 Bulletin 2014/45**

(73) Proprietor: **Nippon Steel Corporation Tokyo (JP)**

(72) Inventors:
- **FUJISHIRO, Taishi**
  **Tokyo 100-8071 (JP)**
- **SAKAMOTO, Shinya**
  **Tokyo 100-8071 (JP)**
- **HARA, Takuya**
  **Tokyo 100-8071 (JP)**
- **TERADA, Yoshio**
  **Tokyo 100-8071 (JP)**

(74) Representative: **Vossius & Partner Patentanwälte Rechtsanwälte mbB Siebertstrasse 3 81675 München (DE)**

(56) References cited:
**EP-A1- 2 093 302**     **EP-A1- 2 264 205**
**WO-A1-99/32671**     **WO-A1-2008/069289**
**WO-A1-2009/125863**     **WO-A1-2010/052928**
**WO-A1-2011/030768**     **WO-A1-2011/099408**
**JP-A- 2008 095 152**     **JP-A- 2009 221 565**

**Description**

[Technical Field]

The present invention relates to a high-strength steel pipe and a high-strength steel plate that are excellent in deformability and low-temperature toughness and are particularly suitable for a line pipe for transporting crude oil and natural gas, and a manufacturing method of the steel plate.

[Background Art]

In recent years, as a long-distance transportation means of crude oil and natural gas, a line pipe becomes important increasingly. Under such circumstances, for the purpose of improving the efficiency of transportation of crude oil and natural gas, an increase in internal pressure of a steel pipe for line pipe has been examined. With this, high strengthening of a steel pipe for line pipe has been required. Further, a steel pipe for high-strength line pipe is also required to have heat affected zone (HAZ) toughness, base material toughness (arrestability resistance), deformability, and so on. Therefore, there have been proposed steel sheets and steel pipes, which are mainly composed of bainite and martensite and have fine ferrite formed therein (for example, Patent Documents 1 to 3). However, these are high-strength steel sheets and steel pipes with X100 (a tensile strength of 760 MPa or more) of the American Petroleum Institute (API) specification.

Further, there has been also required to improve performance of high-strength steel pipes with X70 of the API specification (a tensile strength of 570 MPa or more) and with X80 of the API specification (a tensile strength of 625 MPa or more), which are used practically as a material of a truck pipeline. With respect to this, there has been proposed a method in which a HAZ of a steel pipe having a base material with fine ferrite formed in bainite is heat-treated to increase deformability and low-temperature toughness (for example, Patent Document 4). Further, there has been proposed a method in which in a base structure of a steel sheet having a component that does not easily cause ferrite transformation and improves low-temperature toughness in a HAZ, 20 to 90% of polygonal ferrite is formed to increase low-temperature toughness of the steel sheet to be a base material (for example, Patent Document 5).

There has been proposed a method of further forming ferrite and improving properties such as base material toughness and deformability based on the steel plate and the steel pipe that achieve both strength and toughness and are mainly composed of bainite and martensite. However, recently, there has been required an increase in thickness of steel pipes for high-strength line pipe with X70 or higher of the API specification, (which will be referred to as X70, hereinafter), and further with X80 or higher of the API specification, (which will be referred to as X80, hereinafter), so that transportation efficiency can be improved and development in deep waters can be conducted. Thus, demands for low-temperature toughness and deformability of thick steel pipes for high-strength line pipe are growing increasingly.

Further, drilling regions for crude oil and natural gas are predicted to extend up to extremely cold districts, such as the Arctic Circle, in the future, so that it is predicted that steel pipes for high-strength thick line pipe are required to have a low-temperature toughness guarantee at -40°C or lower and further, at -60°C or lower. Particularly, when a steel pipe is manufactured, a thick steel plate is formed into a pipe shape by a UO, JCO, or bend roll step, and then edge portions are butted each other, and a seam portion is welded through arc welding, but when the plate thickness increases, the heat input by the welding becomes high heat input and a grain size in a heat affected zone (Heat Affected Zone to be referred to as HAZ) increases, and therefore a decrease in low-temperature toughness becomes a critical problem.

For tackling the above, as a technique of improving the low-temperature toughness of the HAZ of the steel pipe for high-strength thick line pipe, there has been proposed a method in which the amount of C is extremely decreased to have a fundamental structure of bainite (for example, Patent Documents 6 and 7). Further, there has been proposed a method in which structure of a HAZ is made fine by using intragranular transformation (for example, Patent Documents 8 to 10). Further, there has been proposed a method in which martensite-austenite constituents (Martensite-Austenite constituent ("M-A," hereinafter)), which are harmful for toughness, are controlled by optimizing alloy elements based on a bainite structure having a specified crystal orientation relationship (for example, Patent Document 11), and there has been proposed a method of making a HAZ fine by using intragranular bainite based on bainite also in a thick steel plate with increased hardenability (for example, Patent Documents 12 and 13).

The above methods are extremely effective for improving the low-temperature toughness in the HAZ. However, recently, demands for a further increase in thickness and low-temperature toughness of steel pipes for high-strength line pipe are growing increasingly, and therefore HAZ toughness under the condition of an extra thickness such as a thickness of 20 mm or more and an extremely low temperature such as -60°C or lower has been required.

[Prior Art Document]

[Patent Document]

Patent Document 1: Japanese Laid-open Patent Publication No. 2003-293078
Patent Document 2: Japanese Laid-open Patent Publication No. 2003-306749
Patent Document 3: Japanese Laid-open Patent Publication No. 2005-146407
Patent Document 4: Japanese Laid-open Patent Publication No. 2004-131799
Patent Document 5: Japanese Laid-open Patent Publication No. 2009-270197
Patent Document 6: Patent Publication No. 3602471
Patent Document 7: Japanese Laid-open Patent Publication No. 2000-345239
Patent Document 8: Japanese Laid-open Patent Publication No. Hei 08-325635
Patent Document 9: Japanese Laid-open Patent Publication No. 2001-355039
Patent Document 10: Japanese Laid-open Patent Publication No. 2003-138340
Patent Document 11: Japanese Laid-open Patent Publication No. 2007-239049
Patent Document 12: Japanese Laid-open Patent Publication No. 2008-163456
Patent Document 13: Japanese Laid-open Patent Publication No. 2009-149917

Also WO2011/030768 and EP-A- 2093302 disclose steel sheets for high strength pipes with low-temperature toughness.

[Summary of the Invention]

[Problems to Be Solved by the Invention]

For improvement of deformability, in a steel plate to be a base material and a steel pipe, it is effective to make a structure compositely composed of soft ferrite and hard bainite and martensite. Further, for improvement of base material toughness, it is effective to make a fine metal structure composed of ferrite + bainite with fine ferrite formed therein.
Meanwhile, for improvement of HAZ toughness, it is effective that a carbon equivalent Ceq and a cracking parameter Pcm are controlled, B, Mo, and so on are further added to thereby increase hardenability, formation of coarse ferrite to form from grain boundaries is suppressed, and a fine metal structure mainly composed of intragranular transformed structures formed by using oxides of Ti is made. Thus, in view of easiness of formation of ferrite, a chemical component composition suitable for the HAZ toughness and a chemical component composition suitable for the base material toughness are opposite to each other.
As a method of solving this, there has been proposed a method of forming ferrite by low-temperature rolling a steel having B and Mo compositely added thereto and having high hardenability in a hot rolling step. However, the addition of Mo increases the alloy cost and the low-temperature rolling increases the load on a production facility, so that the productivity also decreases. Thus, for securing both the low-temperature toughness and the deformability, high alloy cost and high production cost are required, resulting in that it is extremely difficult to inexpensively mass-produce a high-quality high-strength steel plate and steel pipe that satisfy these.
Further, for improvement of transportation efficiency of a line pipe for crude oil, natural gas, and the like, as described above, high strengthening and an increase in thickness of a steel pipe for high-strength line pipe are effective. However, when the pipe thickness of the steel pipe is increased as above in order to achieve an increase in internal pressure of the steel pipe, it becomes difficult to guarantee the HAZ toughness at low temperature. When particularly, a thick material having a thickness of 20 mm or more is arc-welded, the heat input becomes high heat input, a grain size of a HAZ increases, and the amount of M-A also increases, so that it is extremely difficult to guarantee the toughness at extremely low temperatures of -40°C and further -60°C. Then, the above-described conventional methods are not good enough to secure the HAZ toughness under the condition of an extra thickness such as a thickness of 20 mm or more and an extremely low temperature such as -60°C or lower.
The present invention is made in consideration of such circumstances, and the carbon equivalent Ceq and the cracking parameter Pcm are controlled, and B is further added to increase hardenability for the purpose of suppressing the formation of ferrite in a HAZ. Further, in the present invention, in a high-strength steel plate to be a base material, polygonal ferrite to improve deformability and low-temperature toughness is formed by controlling conditions of cooling to be performed after hot rolling without requiring low-temperature rolling. The present invention has an object to provide a high-strength steel plate excellent in deformability and low-temperature toughness, a high-strength steel pipe using this high-strength steel plate as a base material, and a manufacturing method of the steel plate while reducing alloy cost and manufacture cost of the high-strength steel plate in particular.

Incidentally, in the present invention, ferrite that is not extended in the rolling direction and has an aspect ratio of 4 or less is referred to as polygonal ferrite. Here, the aspect ratio is a value of the length of a ferrite grain divided by the width.

[Means for Solving the Problems]

Conventionally, B and Mo both have been added, and a Ceq being an index of hardenability and a cracking parameter Pcm being an index of weldability have been controlled to be in optimal ranges for improvement of HAZ toughness. Then, for improvement of base material toughness and deformability, low-temperature rolling in a hot rolling step has been required, resulting that it has been difficult to inexpensively mass-produce a steel plate for high-strength line pipe and a steel pipe that are excellent in low-temperature toughness and deformability and are thick in particular.

In the present invention, an additive amount of Mo is limited and a chemical composition with high hardenability is made, to thereby suppress coarse grain boundary ferrite in a HAZ. Further, by optimizing the conditions of cooling to be performed after the hot rolling on the steel plate having such a chemical composition, a composite structure of soft fine polygonal ferrite and hard bainite and martensite can be made in the steel plate to be a base material even though the load on the hot rolling step is decreased.

The gist of the present invention is as follows.

[1] A high-strength steel pipe excellent in deformability and low-temperature toughness being a steel pipe obtained by a base steel plate formed into a pipe shape being welded, in which the base steel plate contains, in mass%, C: 0.010 to 0.080%, Si: 0.01 to 0.50%, Mn: 1.2 to 2.8%, S: 0.0001 to 0.0050%, Ti: 0.003 to 0.030%, B: 0.0003 to 0.005%, N: 0.0010 to 0.008%, O: 0.0001 to 0.0080%, one or more of Cr, Cu, and Ni, P: limited to 0.050% or less, Al: limited to 0.020% or less, Mo: limited to 0.03% or less, a Ceq obtained by (Expression 1) below of 0.30 to 0.53 and a Pcm obtained by (Expression 2) below of 0.10 to 0.20, and a balance being composed of iron and inevitable impurities, and a metal structure of the base steel plate contains 27 to 90% in area ratio of polygonal ferrite and a hard phase composed of one or both of bainite and martensite as its balance.

$$\text{Ceq} = \text{C} + \text{Mn}/6 + (\text{Ni} + \text{Cu})/15 + (\text{Cr} + \text{Mo})/5 \cdots \text{(Expression 1)}$$

$$\text{Pcm} = \text{C} + \text{Si}/30 + (\text{Mn} + \text{Cu} + \text{Cr})/20 + \text{Ni}/60 + \text{Mo}/15 + 5\text{B} \cdots \text{(Expression 2)}$$

In (Expression 1) and (Expression 2) above, C, Si, Mn, Ni, Cu, Cr, Mo, and B denote the contents of the respective elements [mass%]. Ni, Cu, Cr, and Mo are calculated as 0 when the respective contents are 0%.

[2] The high-strength steel pipe excellent in deformability and low-temperature toughness according to [1], in which the base steel plate further contains one or two or more of, in mass%, W: 0.01 to 0.50%, V: 0.010 to 0.100%, Nb: 0.001 to 0.200%, Zr: 0.0001 to 0.0500%, Ta: 0.0001 to 0.0500%, Mg: 0.0001 to 0.0100%, Ca: 0.0001 to 0.0050%, REM: 0.0001 to 0.0050%, Y: 0.0001 to 0.0050%, Hf: 0.0001 to 0.0050%, and Re: 0.0001 to 0.0050%, the Ceq is obtained by (Expression 1') below in place of (Expression 1) above, and the Pcm is obtained by (Expression 2') below in place of (Expression 2).

$$\text{Ceq} = \text{C} + \text{Mn}/6 + (\text{Ni} + \text{Cu})/15 + (\text{Cr} + \text{Mo} + \text{V})/5 \cdots \text{(Expression 1')}$$

$$\text{Pcm} = \text{C} + \text{Si}/30 + (\text{Mn} + \text{Cu} + \text{Cr})/20 + \text{Ni}/60 + \text{Mo}/15 + \text{V}/10 + 5\text{B} \cdots \text{(Expression 2')}$$

In (Expression 1') and (Expression 2') above, C, Si, Mn, Ni, Cu, Cr, Mo, V, and B denote the contents of the respective elements [mass%]. Ni, Cu, Cr, and Mo are calculated as 0 when the respective contents are 0%. V is calculated as 0 when the content is 0% and the content is less than 0.010 mass%.

[3] The high-strength steel pipe excellent in deformability and low-temperature toughness according to [1], in which of the base steel plate, in mass%, the content of C is 0.010 to 0.060% and the content of Al is 0.008% or less, a $\gamma/\alpha$ transformation start temperature in a heat affected zone that is obtained by (Expression 3) below is 500 to 600°C, and intragranular transformed structures are contained in a prior $\gamma$ grain in the heat affected zone.

$$\gamma/\alpha \text{ transformation start temperature} = -2500Ceq^2 + 1560Ceq + 370 \cdots \text{(Expression 3)}$$

[4] The high-strength steel pipe excellent in deformability and low-temperature toughness according to [3], in which a martensite-austenite constituent in the heat affected zone is 2.5% or less in area fraction.

[5] The high-strength steel pipe excellent in deformability and low-temperature toughness according to [3], in which a high-angle grain size of a metal structure in the heat affected zone is 80 $\mu$m or less.

[6] The high-strength steel pipe excellent in deformability and low-temperature toughness according to [3], in which a plate thickness of the base steel plate is 20 to 40 mm.

[7] The high-strength steel pipe excellent in deformability and low-temperature toughness according to [3], in which a tensile strength of the base steel plate is 500 to 800 MPa when the circumference direction of the steel pipe is set to the tensile direction.

[8] The high-strength steel pipe excellent in deformability and low-temperature toughness according to [3], in which the base steel plate further contains one or two or more of, in mass%, W: 0.01 to 0.50%, V: 0.010 to 0.100%, Nb: 0.001 to 0.200%, Zr: 0.0001 to 0.0500%, Ta: 0.0001 to 0.0500%, Mg: 0.0001 to 0.0100%, Ca: 0.0001 to 0.0050%, REM: 0.0001 to 0.0050%, Y: 0.0001 to 0.0050%, Hf: 0.0001 to 0.0050%, and Re: 0.0001 to 0.0050%, the Ceq is obtained by (Expression 1') below in place of (Expression 1) above, and the Pcm is obtained by (Expression 2') below in place of (Expression 2).

$$Ceq = C + Mn/6 + (Ni + Cu)/15 + (Cr + Mo + V)/5 \cdots \text{(Expression 1')}$$

$$Pcm = C + Si/30 + (Mn + Cu + Cr)/20 + Ni/60 + Mo/15 + V/10 + 5B \cdots \text{(Expression 2')}$$

In (Expression 1') and (Expression 2') above, C, Si, Mn, Ni, Cu, Cr, Mo, V, and B denote the contents of the respective elements [mass%]. Ni, Cu, Cr, and Mo are calculated as 0 when the respective contents are 0%. V is calculated as 0 when the content is 0% and the content is less than 0.010 mass%.

[9] The high-strength steel pipe excellent in deformability and low-temperature toughness according to [8], in which a martensite-austenite constituent in the heat affected zone is 2.5% or less in area fraction.

[10] The high-strength steel pipe excellent in deformability and low-temperature toughness according to [8], in which a high-angle grain size of a metal structure in the heat affected zone is 80 $\mu$m or less.

[11] The high-strength steel pipe excellent in deformability and low-temperature toughness according to [8], in which a plate thickness of the base steel plate is 20 to 40 mm.

[12] The high-strength steel pipe excellent in deformability and low-temperature toughness according to [8], in which a tensile strength of the base steel plate is 500 to 800 MPa when the circumference direction of the steel pipe is set to the tensile direction.

[13] A high-strength steel plate excellent in deformability and low-temperature toughness includes: in mass%, C: 0.010 to 0.080%; Si: 0.01 to 0.50%; Mn: 1.2 to 2.8%; S: 0.0001 to 0.0050%; Ti: 0.003 to 0.030%; B: 0.0003 to 0.005%; N: 0.0010 to 0.008%; O: 0.0001 to 0.0080%; one or more of Cr, Cu, and Ni; P: limited to 0.050% or less; Al: limited to 0.020% or less; Mo: limited to 0.03% or less; a Ceq obtained by (Expression 1) below of 0.30 to 0.53; and a Pcm obtained by (Expression 2) below of 0.10 to 0.20; and a balance being composed of iron and inevitable impurities, in which a metal structure contains 27 to 90% in area ratio of polygonal ferrite and a hard phase composed of one or both of bainite and martensite as its balance.

$$Ceq = C + Mn/6 + (Ni + Cu)/15 + (Cr + Mo)/5 \cdots \text{(Expression 1)}$$

$$Pcm = C + Si/30 + (Mn + Cu + Cr)/20 + Ni/60 + Mo/15 + 5B \cdots \text{(Expression 2)}$$

In (Expression 1) and (Expression 2) above, C, Si, Mn, Ni, Cu, Cr, Mo, and B denote the contents of the respective elements [mass%]. Ni, Cu, Cr, and Mo are calculated as 0 when the respective contents are 0%.

[14] The high-strength steel plate excellent in deformability and low-temperature toughness according to [13] further includes: one or two or more of, in mass%, W: 0.01 to 0.50%; V: 0.010 to 0.100%; Nb: 0.001 to 0.200%; Zr: 0.0001 to 0.0500%; Ta: 0.0001 to 0.0500%; Mg: 0.0001 to 0.0100%; Ca: 0.0001 to 0.0050%; REM: 0.0001 to 0.0050%; Y: 0.0001 to 0.0050%; Hf: 0.0001 to 0.0050%; and Re: 0.0001 to 0.0050%, in which the Ceq is obtained by (Expression 1') below in place of (Expression 1) above, and the Pcm is obtained by (Expression 2') below in place of (Expression 2).

$$Ceq = C + Mn/6 + (Ni + Cu)/15 + (Cr + Mo + V)/5 \cdots \text{(Expression 1')}$$

$$Pcm = C + Si/30 + (Mn + Cu + Cr)/20 + Ni/60 + Mo/15 + V/10 + 5B \cdots \text{(Expression 2')}$$

In (Expression 1') and (Expression 2') above, C, Si, Mn, Ni, Cu, Cr, Mo, V, and B denote the contents of the respective elements [mass%]. Ni, Cu, Cr, and Mo are calculated as 0 when the respective contents are 0%. V is calculated as 0 when the content is 0% and the content is less than 0.010 mass%.

[15] The high-strength steel plate excellent in deformability and low-temperature toughness according to [13], in which in mass%, the content of C is 0.010 to 0.060% and the content of Al is 0.008% or less, and a $\gamma/\alpha$ transformation start temperature in a heat affected zone that is obtained by (Expression 3) below is 500 to 600°C.

$$\gamma/\alpha \text{ transformation start temperature} = -2500Ceq^2 + 1560Ceq + 370 \cdots \text{(Expression 3)}$$

[16] The high-strength steel plate excellent in deformability and low-temperature toughness according to [15] further includes: one or two or more of, in mass%, W: 0.01 to 0.50%; V: 0.010 to 0.100%; Nb: 0.001 to 0.200%; Zr: 0.0001 to 0.0500%; Ta: 0.0001 to 0.0500%; Mg: 0.0001 to 0.0100%; Ca: 0.0001 to 0.0050%; REM: 0.0001 to 0.0050%; Y: 0.0001 to 0.0050%; Hf: 0.0001 to 0.0050%; and Re: 0.0001 to 0.0050%, in which the Ceq is obtained by (Expression 1') below in place of (Expression 1) above, and the Pcm is obtained by (Expression 2') below in place of (Expression 2).

$$Ceq = C + Mn/6 + (Ni + Cu)/15 + (Cr + Mo + V)/5 \cdots \text{(Expression 1')}$$

$$Pcm = C + Si/30 + (Mn + Cu + Cr)/20 + Ni/60 + Mo/15 + V/10 + 5B \cdots \text{(Expression 2')}$$

In (Expression 1') and (Expression 2') above, C, Si, Mn, Ni, Cu, Cr, Mo, V, and B denote the contents of the respective elements [mass%]. Ni, Cu, Cr, and Mo are calculated as 0 when the respective contents are 0%. V is calculated as 0 when the content is 0% and the content is less than 0.010 mass%.

[17] A manufacturing method of a high-strength steel plate excellent in deformability and low-temperature toughness includes: on a steel slab containing, in mass%, C: 0.010 to 0.080%, Si: 0.01 to 0.50%, Mn: 1.2 to 2.8%, S: 0.0001 to 0.0050%, Ti: 0.003 to 0.030%, B: 0.0003 to 0.005%, N: 0.0010 to 0.008%, O: 0.0001 to 0.0080%, one or more of Cr, Cu, and Ni, P: limited to 0.050% or less, Al: limited to 0.020% or less, Mo: limited to 0.03% or less, a Ceq obtained by (Expression 1) below of 0.30 to 0.53 and a Pcm obtained by (Expression 2) below of 0.10 to 0.20, and a balance being composed of iron and inevitable impurities, performing heating to 950°C or higher; performing a hot rolling step at $Ar_3$ or higher; performing cooling at an average cooling rate of less than 10°C/s; and then performing accelerated cooling at a cooling rate of 10°C/s or more down to a temperature of Bs or lower obtained by (Expression 4) below from a temperature of $Ar_3$ - 100°C to $Ar_3$ - 10°C.

$$Ceq = C + Mn/6 + (Ni + Cu)/15 + (Cr + Mo)/5 \cdots \text{(Expression 1)}$$

$$Pcm = C + Si/30 + (Mn + Cu + Cr)/20 + Ni/60 + Mo/15 + 5B \cdots \text{(Expression 2)}$$

$$Bs\ (°C) = 830 - 270C - 90Mn - 37Ni - 70Cr - 83Mo \cdots \text{(Expression 4)}$$

In (Expression 1), (Expression 2), and (Expression 5) above, C, Si, Mn, Ni, Cu, Cr, Mo, and B denote the contents of the respective elements [mass%]. Ni, Cu, Cr, and Mo are calculated as 0 when the respective contents are 0%.

[18] The manufacturing method of the high-strength steel plate excellent in deformability and low-temperature toughness according to [17], in which in the hot rolling step, non-recrystallized $\gamma$ region rolling at a rolling start temperature set to $Ar_3$ to $Ar_3$ + 100°C and at a reduction ratio set to 1.5 or more is performed.

[19] The manufacturing method of the high-strength steel plate excellent in deformability and low-temperature toughness according to [15], in which the steel slab further contains one or two or more of, in mass%, W: 0.01 to 0.50%, V: 0.010 to 0.100%, Nb: 0.001 to 0.200%, Zr: 0.0001 to 0.0500%, Ta: 0.0001 to 0.0500%, Mg: 0.0001 to 0.0100%, Ca: 0.0001 to 0.0050%, REM: 0.0001 to 0.0050%, Y: 0.0001 to 0.0050%, Hf: 0.0001 to 0.0050%, and Re: 0.0001 to 0.0050%, the Ceq is obtained by (Expression 1') below in place of (Expression 1) above, and the Pcm is obtained by (Expression 2') below in place of (Expression 2).

$$Ceq = C + Mn/6 + (Ni + Cu)/15 + (Cr + Mo + V)/5 \cdots \text{(Expression 1')}$$

$$Pcm = C + Si/30 + (Mn + Cu + Cr)/20 + Ni/60 + Mo/15 + V/10 + 5B \cdots \text{(Expression 2')}$$

In (Expression 1') and (Expression 2') above, C, Si, Mn, Ni, Cu, Cr, Mo, V, and B denote the contents of the respective elements [mass%]. Ni, Cu, Cr, and Mo are calculated as 0 when the respective contents are 0%. V is calculated as 0 when the content is 0% and the content is less than 0.010 mass%.

[20] The manufacturing method of the high-strength steel plate excellent in deformability and low-temperature toughness according to [19], in which in the hot rolling step, non-recrystallized $\gamma$ region rolling at a rolling start temperature set to $Ar_3$ to $Ar_3$ + 100°C and at a reduction ratio set to 1.5 or more is performed.

[Effect of the Invention]

According to the present invention, it becomes possible to suppress formation of coarse grain boundary ferrite in a HAZ and to form polygonal ferrite in a steel plate being a base material without requiring low-temperature rolling in a hot rolling step. Thereby, it is possible to provide a high-strength steel plate having improved strength and HAZ toughness and having extremely excellent deformability and low-temperature toughness as a base material portion, and a high-strength steel pipe using this as a base material.

[Brief Description of the Drawings]

FIG. 1 is a view showing the relationship between a hot working temperature and an area ratio of polygonal ferrite;
FIG. 2 is a view showing the relationship between an accelerated cooling start temperature and an area ratio of polygonal ferrite;
FIG. 3 is a view showing the relationship between an area ratio of polygonal ferrite and deformability and strength;
FIG. 4 is a view showing the relationship between an area ratio of polygonal ferrite and low-temperature toughness of a base material;
FIG. 5 is a view showing the relationship between a Ceq and a $\gamma/\alpha$ transformation start temperature;
FIG. 6 is a view showing the relationship between a $\gamma/\alpha$ transformation start temperature and a high-angle grain size;
FIG. 7 is a view showing the relationship between a high-angle grain size and Charpy absorbed energy at -60°C;
FIG. 8 is an optical micrograph of a base structure in a high-strength steel pipe of the present invention;
FIG. 9 is a schematic view of the base structure in the high-strength steel pipe of the present invention;
FIG. 10 is schematic view of a HAZ structure in the high-strength steel pipe of the present invention;
FIG. 11 is a photograph showing a metal structure of a HAZ when a $\gamma/\alpha$ transformation start temperature is higher than 600°C;
FIG. 12 is a photograph showing the metal structure of the HAZ when the $\gamma/\alpha$ transformation start temperature is 500 to 600°C;
FIG. 13 is a photograph showing the metal structure of the HAZ when an area fraction of M-A is 2.2%; and
FIG. 14 is a photograph showing the metal structure of the HAZ when the area fraction of M-A is 3.0%.

[Mode for Carrying out the Invention]

Hereinafter, there will be explained an embodiment of the present invention. First, the findings of the present inventors leading to the completion of the present invention will be explained.
Generally, making crystal grains fine is effective for improvement of low-temperature toughness and particularly for securing of toughness at extremely low temperatures of -40°C, and further -60°C. In a metal structure of a HAZ, in particular, for the making crystal grains fine, suppression of coarse grain boundary ferrite is extremely effective. However, it has found out that a chemical component composition with high hardenability having an effect of suppressing grain boundary ferrite in a HAZ makes it difficult to form fine polygonal ferrite that improves deformability and low-temperature toughness of a base material.
Thus, the present inventors have turned their attention to a manufacturing method of a high-strength steel plate that forms no ferrite by a thermal history of a HAZ determined according to the heat input at welding and the plate thickness of a steel pipe but is capable of forming polygonal ferrite in a hot rolling step. However, as described above, a chemical component composition with high hardenability that contains Mo and B to be originally added for manufacturing a high-strength steel plate mainly composed of bainite and martensite structure makes it difficult to form polygonal ferrite in a base structure of a high-strength steel plate.
Mo has been known to be an element to greatly improve hardenability by composite addition with B. That is, it is indicated that a Mo-B compositely-added steel has an effect of further delaying ferrite transformation as compared to a B added steel not containing Mo that has the same Ceq. The present inventors first examined the relationship between conditions of rolling in a temperature region where a metal structure is composed of austenite and no recrystallization occurs, namely in a non-recrystallized $\gamma$ region and ferrite formation with respect to the Mo-B compositely-added steel and the B added steel with hardenability increased by elements other than Mo.
First, as the B added steel with hardenability increased by elements other than Mo, a steel containing, in mass%, C: 0.010 to 0.080%, Si: 0.01 to 0.50%, Mn: 1.2 to 2.8%, S: 0.0001 to 0.0050%, Ti: 0.003 to 0.030%, B: 0.0003 to 0.005%, N: 0.0010 to 0.008%, and O: 0.0001 to 0.0080%, and containing one or more of Cr, Cu, and Ni, and containing P: limited to 0.050% or less, Al: limited to 0.020% or less, and Mo: limited to 0.03% or less, and having a Ceq being an index of hardenability of 0.30 to 0.53 and a cracking parameter Pcm being an index of weldability of 0.10 to 0.20, and containing a balance being composed of iron and inevitable impurities was melted and cast to manufacture a steel slab. Further, for comparison, the Mo-B compositely-added steel was melted and cast to manufacture a steel slab.

Next, each test piece having a height of 12 mm and having a diameter of 8 mm was cut out of the obtained steel slabs and was subjected to a work/heat treatment simulating hot rolling. As the work/heat treatment, the test piece was subjected to working once at a reduction ratio of 1.5, subjected to cooling at 0.2°C/s corresponding to air cooling, and further subjected to accelerated cooling at 15°C/s corresponding to water cooling. Incidentally, the temperature at which the working is applied (working temperature) was set to a temperature of $Ar_3$ or higher in order to avoid formation of worked and extended ferrite (worked ferrite) and low-temperature rolling to decrease productivity. The transformation temperature $Ar_3$ at cooling was obtained from a thermal expansion curve.

After the work/heat treatment, an area ratio of polygonal ferrite of the test pieces was measured. Incidentally, ferrite that is not extended in the rolling direction and has an aspect ratio of 1 to 4 was set as polygonal ferrite.

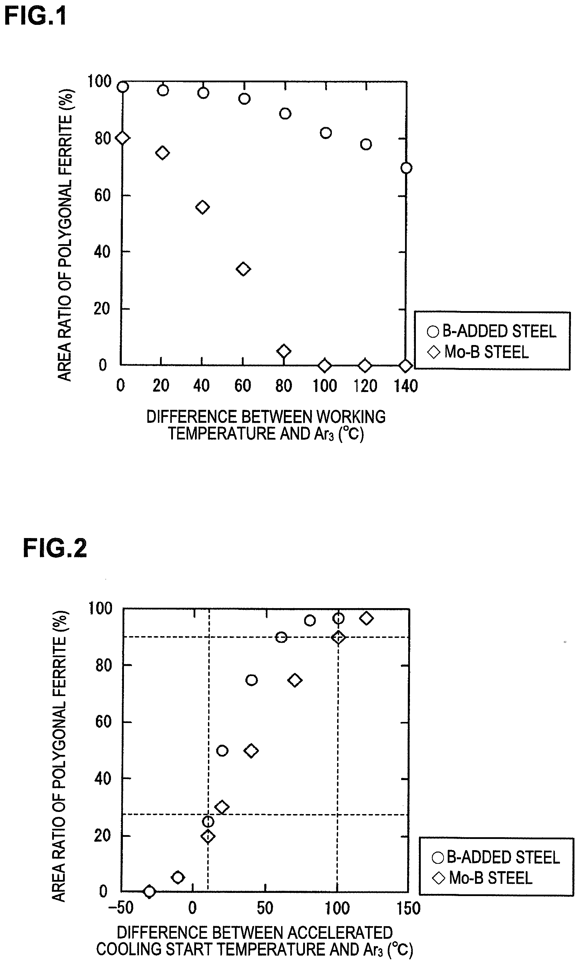

The present inventors set the temperature at which the accelerated cooling at 15°C/s corresponding to water cooling is started (accelerated cooling start temperature) to $Ar_3$ - 70°C and examined the condition enabling formation of polygonal ferrite while changing the above-described working temperature. Results are shown in FIG. 1. Incidentally, FIG. 1 is that the area ratio of polygonal ferrite is plotted with respect to the difference between the working temperature and $Ar_3$, and "◇" indicates the result of the Mo-B compositely-added steel and "○" indicates the result of the B added steel with hardenability increased by elements other than Mo. As shown in FIG. 1, it is learned that in the Mo-B compositely-added steel, as long as the rolling start temperature of the above-described work/heat treatment is set to $Ar_3$ + 60°C or lower and low-temperature rolling (strain-introducing rolling) at a reduction ratio of 1.5 or more is performed, 27% or more in area ratio of polygonal ferrite can be obtained. That is, in the case of the Mo-B compositely-added steel, the working temperature is strictly controlled and rolling needs to be performed at low temperature. On the other hand, in the B added steel with hardenability increased by elements other than Mo, it is learned that 27% or more in area ratio of polygonal ferrite is formed regardless of the working temperature.

Further, they examined the relationship between the accelerated cooling start temperature after hot rolling and the area ratio of polygonal ferrite, the relationship between the area ratio of polygonal ferrite and the deformability, and the relationship between the area ratio of polygonal ferrite and the low-temperature toughness. As for the hot rolling, a reheating temperature was set to 1050°C, the number of passes was set to 20 to 33, rolling was finished at $Ar_3$ or higher, air cooling was performed, and then water cooling was performed as the accelerated cooling. Incidentally, the reduction ratio in the non-recrystallized $\gamma$ region was set to 1.5 or more, the air cooling was performed, and then the water cooling (accelerated cooling) was started from various temperatures.

The area ratio of polygonal ferrite of each steel plate obtained by the above-described hot rolling was measured by using an optical microscope, and the steel plate was subjected to a tensile test and a drop weight tear test (Drop Weight Tear Test to be referred to as DWTT) to evaluate a tensile property and low-temperature toughness.

The tensile property was evaluated by using a test piece of the API specification, a tensile strength, a yield strength, and a ratio of yield strength (YS) and tensile strength (TS) (YS/TS to be referred to as a yield ratio) were found, and thereby the area ratio of polygonal ferrite capable of achieving both strength and deformability was examined.

Further, the DWTT was performed at -60°C, a shear area (Shear Area to be referred to as SA) of a fracture was found, and the low-temperature toughness was evaluated.

The relationship between the accelerated cooling start temperature and the area ratio of polygonal ferrite is shown in FIG. 2. In FIG. 2, "○" indicates the result of the B added steel and "◇" indicates the result of the Mo-B compositely-added steel. It is learned from FIG. 2 that as long as the accelerated cooling start temperature after hot rolling is set to $Ar_3$ - 100°C to $Ar_3$ - 10°C in the B added steel with hardenability increased by elements other than Mo, the area ratio of polygonal ferrite in the steel plate becomes 27 to 90%. That is, as long as air cooling is performed down to a temperature in the range of $Ar_3$ - 100°C to Ar3 - 10°C from the temperature of $Ar_3$ or higher after the hot rolling is finished, 27 to 90% in area ratio of polygonal ferrite can be formed.

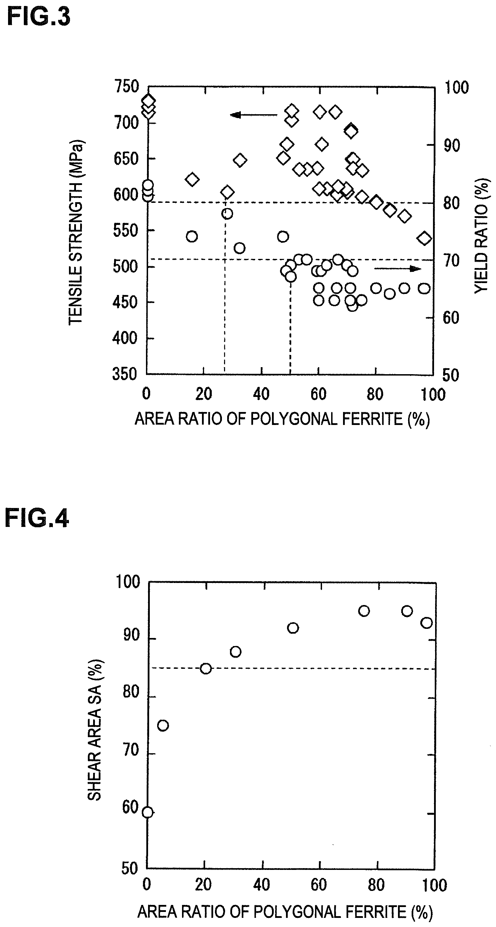

Further, with respect to the B added steel with hardenability increased by elements other than Mo, the relationship between the area ratio of polygonal ferrite and the tensile strength and the relationship between the area ratio of polygonal ferrite and the yield ratio are shown in FIG. 3. "○" indicates the relationship between the area ratio of polygonal ferrite and the yield ratio and "◇" indicates the relationship between the area ratio of polygonal ferrite and the tensile strength. It is learned from FIG. 3 that as long as the area ratio of polygonal ferrite becomes 27% or more, the yield ratio becomes 80% or less and as long as the area ratio of polygonal ferrite becomes 50% or more, extremely good deformability, which is the yield ratio of 70% or less, can be obtained.

Further, it is learned from FIG. 3 that for securing the tensile strength of 570 MPa or more corresponding to X70, it is necessary to make the area ratio of polygonal ferrite become 90% or less. Further, for securing the tensile strength of 625 MPa or more corresponding to X80, the area ratio of polygonal ferrite is preferably made to become 75% or less. Further, for more stably securing the tensile strength of 625 MPa or more corresponding to X80, the area ratio of polygonal ferrite is more preferably made to become 70% or less, and the further preferable value is 60% or less.

That is, it is learned from FIG. 3 that the area ratio of polygonal ferrite becomes 27 to 90%, and thereby the balance between the deformability and the strength improves.

Further, the relationship between the area ratio of polygonal ferrite and the shear area SA at -60°C is shown in FIG. 4. It is learned from FIG. 4 that for obtaining 85% or more of the shear area, the area ratio of polygonal ferrite only needs to be 20%.

As above, the present inventors have found out that in order to form sufficient polygonal ferrite in the B added steel so that the low-temperature toughness and the deformability in the HAZ and the base material can be improved, as a third element to be added with B, using alloying elements other than Mo is important. The present inventors have performed further detailed examination and have obtained the following findings to complete the present invention.

In order to form polygonal ferrite in the B added steel to increase the base material toughness and the deformability, the effect of the third element to be added with B to improve the hardenability is important. Then, in order to secure the HAZ toughness, a chemical component composition with increased hardenability needs to be made. However, when the composite addition of B and Mo is applied in order to increase the hardenability, rolling conditions need to be controlled strictly to cause a problem that production cost increases and alloying cost increases. Thus, it is necessary to make a chemical component composition in which hardenability improving elements other than Mo are selected as the third element to be added with B.

Further, in order to improve the hardenability, the Ceq being an index of hardenability is made to fall within the 0.30-to-0.53 range, and further as an element to improve the hardenability, elements such as Mn, Cr, Ni and Cu are selected in addition to C.

Further, there is no need to perform what is called strain-introducing rolling in order to form polygonal ferrite after hot rolling. Here, the strain-introducing rolling means hot rolling to be performed under the condition that a rolling start temperature is $Ar_3$ + 60°C or lower and a reduction ratio is 1.5 or more. In the present invention, polygonal ferrite that improves the deformability and the low-temperature toughness can be formed only by controlling the conditions of cooling to be performed after hot rolling without performing this strain-introducing rolling. The accelerated cooling start temperature after hot rolling is set to $Ar_3$ - 100°C to $Ar_3$ - 10°C, thereby making it possible to make the area ratio of polygonal ferrite of the steel plate become 27 to 90%. Incidentally, the cooling down to the accelerated cooling start temperature may be performed by air cooling, or may also be performed by slow cooling at an average cooling rate of less than 10°C/s.

Further, after the hot rolling, the slow cooling is performed down to the above-described accelerated cooling start temperature to form polygonal ferrite in this manner, and then the accelerated cooling is performed at an average cooling rate of 10°C/s or more for strength improvement by bainite transformation and martensite transformation. Further, for securing the strength, the accelerated cooling needs to be stopped at a bainite forming temperature Bs or lower.

Further, for improvement of the HAZ toughness at a low temperature, particularly for securing the HAZ toughness at extremely low temperatures of -40°C and further -60°C, a decrease in M-A being a hard second phase and making crystal grains fine are required. However, in a thick material having a thickness of 20 mm or more, the heat input at welding becomes high heat input, a grain size of a HAZ increases, and M-B being a hard second phase harmful for the toughness also increases. Therefore, it is extremely difficult to guarantee the HAZ toughness at extremely low temperatures of -40°C and further -60°C. Thus, the present inventors have next turned their attention to a method of suppressing the formation of M-A at welding and further preventing the formation of coarse grain boundary ferrite. Further, the present inventors have turned their attention to a method in which intragranular transformation starting from oxides is promoted and further the hardenability is increased, and thereby intragranular transformed structures to be formed at the time of welding are made fine, a high-angle grain size of a metal structure composed of bainite and the intragranular transformed structure is decreased, and the low-temperature toughness in the HAZ is improved. Incidentally, the intragranular transformed structure in this embodiment means intragranular ferrite or intragranular bainite formed in a petal shape (in a radial pattern) starting from a finely dispersed inclusion.

Thus, the present inventors have next examined the conditions of components affecting the temperature at which the intragranular transformed structure is formed in the HAZ.

First, a steel containing, in mass%, C: 0.010 to 0.060%, Si: 0.01 to 0.50%, Mn: 1.2 to 2.8%, S: 0.0001 to 0.0050%, Ti: 0.003 to 0.030%, B: 0.0003 to 0.005%, N: 0.0010 to 0.008%, and O: 0.0001 to 0.0080%, and containing one or more of Cr, Cu, and Ni, and containing P: limited to 0.050% or less, Al: limited to 0.008% or less, and M: limited to 0.03% or less, and having a Ceq being an index of hardenability of 0.30 to 0.53 and a cracking parameter Pcm being an index of weldability of 0.10 to 0.20, and having a balance being composed of iron and inevitable impurities was melted and cast to manufacture a steel slab.

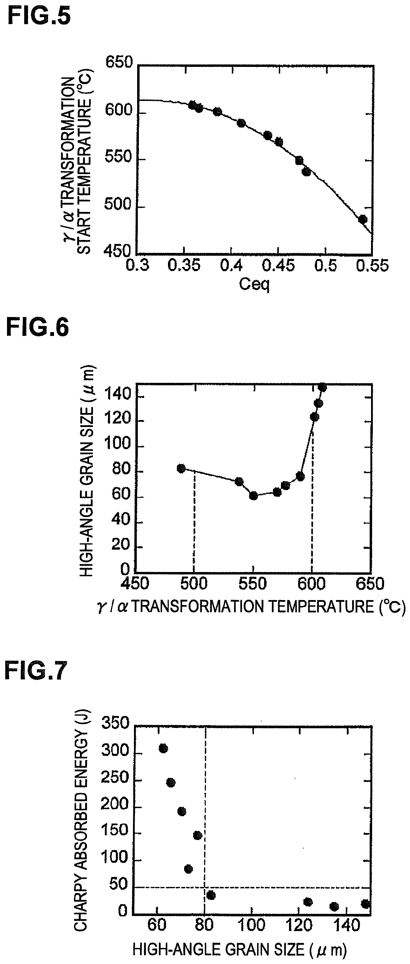

Next, a test piece having a length of 10 mm and having a diameter of 3 mm was cut out of the obtained steel slab and was subjected to a heat treatment simulating a HAZ of a weld zone to measure a $\gamma/\alpha$ transformation start temperature of bainite and intragranular transformed structure by thermal expansion measurement. The relationship between the Ceq and the $\gamma/\alpha$ transformation start temperature at that time is shown in FIG. 5.

Further, a 12 mm square test piece having a length 120 mm was cut out of the steel slab and was subjected to the above-described heat treatment simulating the HAZ of the weld zone to then measure a high-angle grain size of the metal structure composed of bainite and intragranular transformed structure by an EBSP (Electron Back Scatter Diffraction Pattern) method. Incidentally, an interface having an angular difference of 15° or more between crystal grains was defined as a high-angle grain boundary and the maximum grain size of grain sizes of crystal grains surrounded by the high-angle grain boundary was defined as a high-angle grain size effective for the HAZ toughness (an effective crystal grain size). Results are shown in FIG. 6. Incidentally, the grain size means a radius of a circle having the same area as that of a crystal grain.

Further, a 12 mm square test piece having a length of 120 mm was cut out of the steel slab and was subjected to the above-described heat treatment simulating the HAZ of the weld zone and then was subjected to a Charpy impact test to measure absorbed energy at -60°C. Results are shown in FIG. 7.

As shown in FIG. 5, it is learned that with an increase in the Ceq, the $\gamma/\alpha$ transformation start temperature decreases. That is, by increasing the hardenability, the $\gamma/\alpha$ transformation start temperature of the intragranular transformed structure can be decreased.

As shown in FIG. 6, it is learned that with a decrease in the $\gamma/\alpha$ transformation start temperature, the high-angle grain size of the metal structure composed of bainite and intragranular transformed structure decreases, but when the $\gamma/\alpha$ transformation start temperature decreases to lower than 500°C, the high-angle grain size increases. This is conceivably because the decrease in grain size of the intragranular transformed structure to be formed greatly contributes to an effect of making crystal grains fine obtained by the decrease in the $\gamma/\alpha$ transformation start temperature, but when the $\gamma/\alpha$ transformation start temperature becomes too low, no intragranular transformed structures are obtained and a structure mainly composed of bainite and martensite is formed, resulting in that crystal grains become coarse. The effect of making structure fine obtained by the decrease in the $\gamma/\alpha$ transformation start temperature conceivably results from the fact that as transformation is caused at a lower temperature, the degree of undercooling increases, the frequency of formation of nuclei for intragranular transformation increases, and intragranular transformation is promoted.

FIG. 7 is a view showing the relationship between the high-angle grain size of the metal structure composed of bainite and intragranular transformed structure and the Charpy absorbed energy at -60°C. As shown in FIG. 7, it is learned that when the high-angle grain size decreases, the Charpy absorbed energy at -60°C increases, and when the high-angle grain size is 80 $\mu$m or less, the absorbed energy at -60°C becomes 50 J or more. That is, it is learned that by making the metal structure composed of bainite and intragranular transformed structure fine, excellent toughness can be obtained even at an extremely low temperature of -60°C.

As above, the present inventors have found out a method in which formation of M-A at welding is suppressed, the hardenability of steel is increased to prevent formation of coarse grain boundary ferrite, intragranular transformation starting from an inclusion is caused, and further the intragranular transformation is promoted by the control of the $\gamma/\alpha$ transformation start temperature, to thereby decrease the high-angle grain size of the metal structure composed of bainite and intragranular transformed structure to improve the low-temperature toughness in the HAZ.

For suppressing the formation of M-A at welding, decreasing C and limiting Mo are effective. M-A is formed as a result that the HAZ exposed to high temperature by welding is transformed into an austenite phase, and in a process where the transformation progresses during cooling thereafter, concentration of C to a non-transformed austenite phase progresses, and the austenite phase is stabilized. Therefore, by decreasing the amount of C, the concentration of C to the non-transformed austenite phase is suppressed, resulting in that the formation of M-A is suppressed. Further, by decreasing the amount of C and also limiting the amount of Mo contributing to the formation of M-A as above, the formation of M-A can be further suppressed.

Further, for promoting the intragranular transformation, decreasing the amount of Al and adding an appropriate amount of Ti are effective. When oxides of Ti are finely dispersed, they effectively act as formation nuclei for the intragranular transformation. However, when Al is added in large amounts, formation of oxides of Ti to act as formation nuclei for the intragranular transformation is inhibited, so that in the present invention, an appropriate amount of Ti is added and the amount of Al is decreased.

Further, for suppressing the formation of coarse grain boundary ferrite that deteriorates the low-temperature toughness in the HAZ, increasing the hardenability by adding an appropriate amount of B is extremely effective.

Further, it is learned that for further decreasing the high-angle grain size of the structure composed of bainite and intragranular transformed structure, decreasing the $\gamma/\alpha$ transformation start temperature is extremely important. Thus, the $\gamma/\alpha$ transformation start temperature is decreased by using elements other than Mo to increase M-A.

Further, by the addition of one or two or more of Mn, Cr, Cu, and Ni, the hardenability is increased to decrease the $\gamma/\alpha$ transformation start temperature. Then, by fine intragranular transformed structures transformed at low temperature, the metal structure in the HAZ is composed of fine grains made of bainite and the intragranular transformed structures, thereby making it possible to increase the low-temperature toughness in the HAZ.

That is, as compared to the steels using the intragranular transformed structure that have been reported so far, by decreasing C and limiting Mo, the formation of M-A is further decreased. Then, by the addition of Mn and one or two or more of Cr, Cu, and Ni, the hardenability is increased, the $\gamma/\alpha$ transformation start temperature of the intragranular transformed structure is decreased, and the effective crystal grain size with respect to the HAZ toughness is further decreased.

(Chemical composition)

Next, there will be explained a chemical composition of a high-strength steel pipe and a high-strength steel plate in the present invention. Incidentally, regarding the chemical composition, % means mass%.

(C: 0.01 to 0.080%)

C is an element to improve the strength of steel. In order to form a hard phase made of one or both of bainite and martensite in the metal structure, 0.01% or more of C needs to be contained. Further, in the present invention, in order to achieve both high strength and high toughness, the content of C is set to 0.080% or less. Further, in order to suppress the formation of M-A in the metal structure of the HAZ in particular to achieve both high strength and high toughness, the content of C is set to 0.060% or less. Incidentally, in view of the balance between the strength and the toughness, the content of C is preferably set to 0.02 to 0.070%, and more preferably set to 0.02 to 0.050% when the HAZ toughness is further considered.

(Si: 0.01 to 0.50%)

Si is an element useful for deoxidation and strength improvement. In order to sufficiently perform deoxidation, 0.01% or more of Si needs to be contained in the steel. On the other hand, when greater than 0.50% of Si is contained in the steel, there is caused a risk that the toughness of the HAZ deteriorates, so that the upper limit of the content of Si is set to 0.50%. Incidentally, in view of the balance between the strength and the toughness and making deoxidation more efficient, the content of Si is preferably set to 0.05 to 0.3% and more preferably set to 0.1 to 0.25%.

(Mn: 1.2 to 2.8% or less)

Mn is an inexpensive element, and is an important element for increasing the Ceq being an index of hardenability, decreasing the $\gamma/\alpha$ transformation start temperature of bainite and the intragranular transformed structure, and decreasing the high-angle grain size to increase the HAZ toughness. Further, even though being added with B, Mn makes it possible to form polygonal ferrite in the base material without performing low-temperature rolling and to improve the base material toughness. For securing the strength and the toughness, 1.2% or more of Mn needs to be contained in the steel.
On the other hand, when Mn is added excessively, the $\gamma/\alpha$ transformation start temperature decreases excessively, no intragranular transformed structures can be obtained, the grain size increases, and the HAZ toughness is impaired, so that the upper limit is set to 2.8%. Further, in view of productivity when melting the steel, the upper limit of Mn is preferably set to 2.5%, and more preferably set to 2.2%.

(S: 0.0001 to 0.0050%)

S is an impurity, and when greater than 0.0050% of S is contained in the steel, coarse sulfides are formed and the toughness decreases, so that the content of S is set to 0.0050 or less. Incidentally, for further suppressing the decrease in toughness, the content of S is preferably set to 0.003% or less, and more preferably set to 0.0025% or less. Further, when oxides of Ti are finely dispersed in the steel plate, MnS precipitates, intragranular transformation is caused, and the toughness of the base steel plate and the HAZ improves. In order to obtain this effect, 0.0001% or more of S needs to be contained in the steel. Thus, the content of S is set to 0.0001 to 0.0050%.

(Ti: 0.003 to 0.030%)

Ti is an important element for forming nitrides of Ti to contribute to the decrease in crystal grain size of the base steel plate and the HAZ. Therefore, 0.003% or more of Ti needs to be contained in the steel. For further decreasing the crystal grain size of the HAZ, the content of Ti is preferably 0.005% or more, and more preferably 0.008% or more.
On the other hand, when Ti is contained in the steel excessively, coarse inclusions are formed to impair the toughness, so that the upper limit of Ti is set to 0.030%. Further, for more finely dispersing oxides of Ti, the content of Ti is preferably 0.028% or less, and more preferably 0.025% or less.
When oxides of Ti are finely dispersed, they effectively act as formation nuclei for the intragranular transformation. Incidentally, when the content of oxygen is large when adding Ti, coarse oxides of Ti are formed, so that at the time of steelmaking, deoxidation is preferably performed by Si and Mn to decrease the content of oxygen in the steel. In this case, oxides of Al are more likely to be formed than oxides of Ti, so that it is not preferred that an excessive amount of Al should be added to the steel for deoxidation.

(B: 0.0003 to 0.005%)

B significantly increases the hardenability, and is an important element to suppress the formation of coarse grain boundary ferrite in the HAZ. For obtaining this effect, 0.0003% or more of B needs to be contained in the steel. Further, for more securely increasing the hardenability, the content of B is preferably 0.0005% or more.
On the other hand, when B is added to the steel excessively, coarse BN is formed and the toughness of the HAZ in particular decreases, so that the upper limit of the content of B is set to 0.005%.

(N: 0.0010 to 0.008%)

N forms TiN and suppresses coarsening of $\gamma$ grains when the slab is reheated and suppresses coarsening of $\gamma$ grains in the HAZ to improve the low-temperature toughness of the base material and the HAZ. The minimum amount necessary for this is 0.0010%.
On the other hand, when N is contained excessively, BN is formed to impair the hardenability improving effect of B, resulting in that coarse grain boundary ferrite is formed to impair the HAZ toughness, or coarse BN is formed to impair the HAZ toughness. Therefore, the upper limit of N is set to 0.008%. Incidentally, for stably obtaining the effect by the addition of N, the content of N is preferably set to 0.0020 to 0.007.

(O: 0.0001 to 0.0080%)

O is an impurity, and the upper limit of the content of O needs to be set to 0.0080% for avoiding the decrease in toughness caused by the formation of inclusions.
On the other hand, for forming oxides of Ti to contribute to the intragranular transformation, the content of O remaining in the steel at the time of casting is set to 0.0001 % or more.
Incidentally, when the balance between the securing of toughness and the formation of oxides of Ti is considered, the content of O is preferably set to 0.0010 to 0.0050%.

(P: 0.050% or less)

P is an impurity, and when greater than 0.050% of P is contained in the steel, the toughness of the base steel plate decreases significantly. Thus, the content of P is limited to 0.050% or less. For improving the toughness of the HAZ, the content of P is preferably limited to 0.020% or less. Incidentally, the lower limit value of the content of P is not set in particular, but setting the lower limit value to less than 0.0001% is disadvantageous economically, so that this value is preferably set to the lower limit value.

(Al: 0.020% or less)

Al is a deoxidizer, but for increasing the toughness of the steel plate and the HAZ by suppressing the formation of inclusions, the upper limit of Al needs to be set to 0.020%. The content of Al is limited as above, thereby making it possible to finely disperse oxides of Ti that contribute to the intragranular transformation. Particularly, for sufficiently forming oxides of Ti that contribute to the intragranular transformation, the upper limit of Al is set to 0.008%. For finely dispersing oxides of Ti, the upper limit of Al is preferably 0.005%, and for more stably obtaining oxides of Ti, the upper limit of Al is more preferably 0.003%. Incidentally, the lower limit value of the content of Al is not set in particular, but may be greater than 0%.

(Mo: 0.03% or less)

Mo increases the hardenability significantly by composite addition with B in particular, and is an element effective for achieving high strength of the base steel plate and improving the HAZ toughness, but the addition of Mo makes the formation of polygonal ferrite in the base steel plate difficult, to thereby cause a risk that the low-temperature toughness and the deformability of the base material cannot be secured sufficiently. Therefore, for the improvement of the base material toughness and the deformability, the amount of Mo is limited to 0.03% or less. Further, Mo is an expensive element, and it is preferred that Mo should not be added in view of the alloying cost.

(Cr, Cu, and Ni)

Further, the high-strength steel pipe and the high-strength steel plate of the present invention contain one or more of Cr, Cu, and Ni in addition to the above-described elements. Cr forms polygonal ferrite in the base steel plate without performing low-temperature rolling even though being added with B, and is an element capable of improving the base material toughness. Further, Cr is an inexpensive element and is an important element for increasing the Ceq being an index of hardenability, decreasing the $\gamma/\alpha$ transformation start temperature, and decreasing the high-angle grain size to increase the HAZ toughness. Further, Cu and Ni are effective elements that increase the strength without impairing the toughness, and increase the Ceq being an index of hardenability and improve the HAZ toughness. Further, Cu and Ni form polygonal ferrite in the base material without performing low-temperature rolling even though being added with B, and improve the base material toughness. Further, Cu and Ni are elements that decrease the $\gamma/\alpha$ transformation start temperature to decrease the high-angle grain size. Incidentally, Cu and Ni are preferably compositely contained for suppressing occurrence of surface flaws.

As will be described later, the contents of Cr, Cu, and Ni are limited so as to make the Ceq to be obtained by (Expression 1) (or (Expression 1')) become 0.30 to 0.53 and are limited so as to make the Pcm to be obtained by (Expression 2) (or (Expression 2')) become 0.10 to 0.20. Further, for suppressing the formation of M-A in the metal structure of the HAZ in particular to achieve both high strength and high toughness, the contents of Cr, Cu, and Ni are limited so as to make the $\gamma/\alpha$ transformation start temperature to be obtained by (Expression 3) become 500 to 600°C.

Further, to the high-strength steel pipe and the high-strength steel plate of the present invention, one or two or more of W, V, Nb, Zr, and Ta may also be added as an element to improve the strength and the toughness, in addition to the above-described elements. Further, these elements can be regarded as impurities because they do not cause adverse effects particularly when their contents are each less than the preferable lower limit.

(W, V, Nb, Zr, Ta, Mg, Ca, REM, Y, Hf, and Re)

Further, in the present invention, one or two or more of W, V, Nb, Zr, Ta, Mg, Ca, REM, Y, Hf, and Re may also be contained as an element to improve the strength and the toughness, in addition to the above-described elements. Further, these elements can be regarded as impurities because they do not cause adverse effects particularly when their contents are each less than the preferable lower limit.

W, V, Nb, Zr, and Ta each form carbides and nitrides and are elements to improve the strength of the steel by precipitation strengthening, and one or two or more of them may also be contained. For effectively increasing the strength, the lower limit of the amount of W is preferably set to 0.01%, the lower limit of the amount of V is preferably set to 0.010%, the lower limit of the amount of Nb is preferably set to 0.001%, and the lower limits of the amount of Zr and the amount of Ta are both preferably set to 0.0001%.

On the other hand, when W is added excessively, the strength sometimes increases excessively due to the improvement of the hardenability to impair the toughness, so that the upper limit of the amount of W is preferably set to 0.50%. Further, when V, Nb, Zr, and Ta are added excessively, carbides and nitrides sometimes become coarse to impair the toughness, so that the upper limit of the amount of V is preferably set to 0.100%, the upper limit of the amount of Nb is preferably set to 0.200%, and the upper limits of the amount of Zr and the amount of Ta are both preferably set to 0.0500%.

Mg, Ca, REM, Y, Hf, and Re each are an element to control the form of inclusions to achieve the improvement of toughness, and one or two or more of them may also be contained.

Mg is an element exhibiting an effect for making oxides fine and suppressing the form of sulfides. Particularly, fine oxides of Mg act as formation nuclei for the intragranular transformation, and have an effect of suppressing the increase in grain size as pinning particles. For obtaining these effects, 0.0001% or more of Mg is preferably contained. On the other hand, greater than 0.0100% of Mg is contained, coarse oxides are sometimes formed to decrease the toughness of the HAZ, so that the upper limit of the amount of Mg is preferably set to 0.0100%.

Ca and REM are elements useful for controlling the form of sulfides and are elements that form sulfides to suppress the formation of MnS extended in the rolling direction and improve properties of the steel material in the plate thickness direction, particularly lamellar tear resistance. For obtaining these effects, the lower limits of the amount of Ca and the amount of REM are both preferably set to 0.0001% or more. On the other hand, when the amount of Ca and the amount of REM exceed 0.0050%, oxides increase, fine oxides containing Ti decrease, and occurrence of intragranular transformation is sometimes inhibited, so that the amount of Ca and the amount of REM are each preferably set to 0.0050% or less.

Y, Hf, and Re are also elements exhibiting effects similar to those of Ca and REM, and when they are added excessively, occurrence of intragranular transformation is sometimes inhibited. Therefore, the preferable ranges of the amount of Y, the amount of Hf, and the amount of Re are each 0.0001 to 0.0050%.

Further, the balance other than the above-described elements is practically composed of Fe, and elements that do not impair the functions and effects of the present invention such as inevitable impurities can be added in minute amounts.

(Carbon equivalent Ceq)

In the present invention, for securing the low-temperature toughness of the steel plate and the HAZ, the carbon equivalent Ceq of (Expression 1) below that is calculated from the respective contents [mass%] of C, Mn, Ni, Cu, Cr, Mo, and V being the elements contributing to the hardenability improvement, is set to 0.30 to 0.53. The carbon equivalent Ceq has been known to be correlated with the maximum hardness of the weld zone and is a value to be an index of hardenability and weldability.

$$Ceq = C + Mn/6 + (Ni + Cu)/15 + (Cr + Mo + V)/5 \cdots (Expression\ 1)$$

Here, C, Mn, Ni, Cu, Cr, and Mo in (Expression 1) above denote the contents of the respective elements [mass%]. Ni, Cu, Cr, and Mo are calculated as 0 when the respective contents are 0%.
Incidentally, in the present invention, when V is further contained, the Ceq is obtained by (Expression 1') below in place of (Expression 1) above.

$$Ceq = C + Mn/6 + (Ni + Cu)/15 + (Cr + Mo + V)/5 \cdots (Expression\ 1')$$

Here, C, Mn, Ni, Cu, Cr, Mo, and V in (Expression 1') above denote the contents of the respective elements [mass%]. Ni, Cu, Cr, and Mo are calculated as 0 when the respective contents are 0%. V is calculated as 0 when the content is less than 0.010 mass%.

(Cracking parameter Pcm)

Further, for securing the low-temperature toughness of the steel plate and the HAZ, the cracking parameter Pcm of (Expression 2) below that is calculated from the contents [mass%] of C, Si, Mn, Cu, Cr, Ni, Mo, V, and B is set to 0.10 to 0.20. The cracking parameter Pcm has been known as a coefficient enabling a guess of low-temperature cracking sensitivity at welding, and is a value to be an index of hardenability and weldability.

$$Pcm = C + Si/30 + (Mn + Cu + Cr)/20 + Ni/60 + Mo/15 + 5B \cdots$$
$$(Expression\ 2)$$

Here, C, Si, Mn, Ni, Cu, Cr, Mo, and B in (Expression 2) above denote the contents of the respective elements [mass%]. Ni, Cu, Cr, and Mo are calculated as 0 when the respective contents are 0%.
Incidentally, in the present invention, when V is further contained, the Pcm is obtained by (Expression 2') below in place of (Expression 2) above.

$$Pcm = C + Si/30 + (Mn + Cu + Cr)/20 + Ni/60 + Mo/15 + V/10 + 5B$$
$$\cdots (Expression\ 2')$$

Here, C, Si, Mn, Ni, Cu, Cr, Mo, V, and B in (Expression 2') above denote the contents of the respective elements [mass%]. Ni, Cu, Cr, and Mo are calculated as 0 when the respective contents are 0%. V is calculated as 0 when the content is less than 0.010 mass%.
Further, for obtaining good HAZ toughness at an extremely low temperature of -60°C in particular, it is necessary to make a microstructure in which the high-angle grain size of the metal structure composed of bainite and intragranular transformed structure is 80 μm or less. For achieving it, in addition to the limitation of the Ceq and the Pcm, the $\gamma/\alpha$ transformation start temperature in the HAZ obtained by (Expression 3) below is further set to 500 to 600°C.

$$\gamma/\alpha \text{ transformation start temperature} = -2500Ceq^2 + 1560Ceq + 370 \cdots$$

(Expression 3)

(Metal structure)

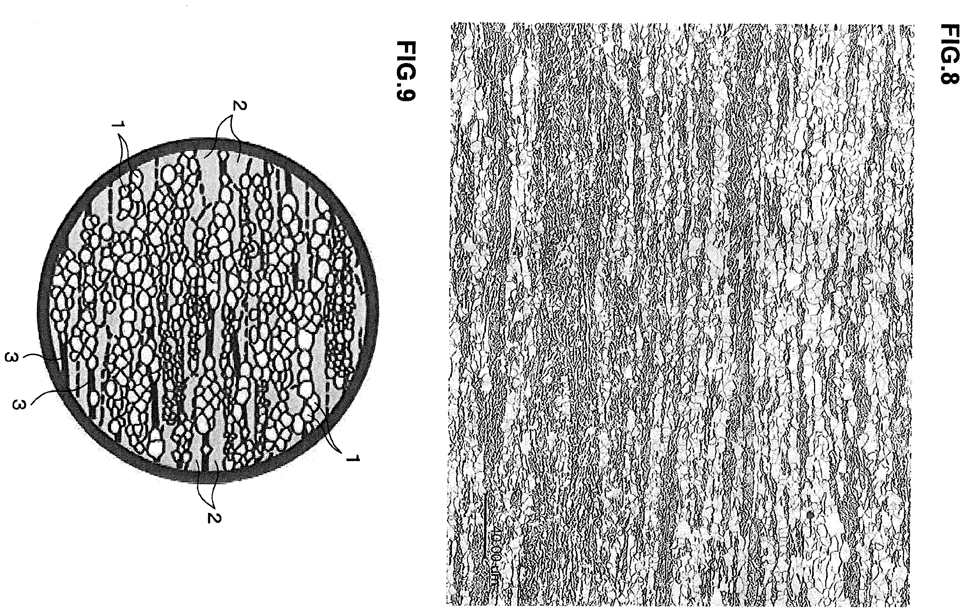

The metal structure of the base steel plate of the high-strength steel pipe of the present invention and the metal structure of the high-strength steel plate of the present invention are each mainly composed of polygonal ferrite and contain a hard phase as its balance. Here, FIG. 8 is a photograph showing the metal structure of the base steel plate. FIG. 9 is a schematic view for explaining the metal structure of the base steel plate. The polygonal ferrite is ferrite to be formed at a relatively high temperature during air cooling after hot rolling. The polygonal ferrite has an aspect ratio of 1 to 4, and is distinguished from ferrite rolled to be extended (worked ferrite) and acicular ferrite (acicular ferrite) and Widmanstatten ferrite that are formed at a relatively low temperature during accelerated cooling after hot rolling. Here, the aspect ratio is a value of the length of a ferrite grain divided by the width.

Further, the polygonal ferrite is observed as a white, round, and massive structure not containing precipitates such as coarse cementite and martensite-austenite constituents (to be referred to as M-A) in a grain with an optical microscope.

Further, the above-described hard phase is a structure composed of one or both of bainite and martensite. Incidentally, in the structure to be observed with an optical microscope, as the balance other than polygonal ferrite, bainite, and martensite, retained austenite and M-A are sometimes contained. The fraction of M-A in the base material is desirably 8.0% or less.

As shown in FIG. 9, in the metal structure of the base steel plate, in contrast to white, round, and massive polygonal ferrite 1, a hard phase 2 such as bainite appears in a lath shape or a plate shape, for example, and M-A 3 appears outside the polygonal ferrite 1.

The area ratio of polygonal ferrite in the steel plate is made to become 27% or more. As described above, in the steel plate having the chemical composition with increased hardenability, polygonal ferrite is formed and the balance is composed of the hard phase of bainite and martensite, and thereby the balance between the strength and the deformability is improved. When the area fraction of polygonal ferrite is 27% or more, the yield ratio being an index of deformability (YS/TS) becomes 80% or less, and when the area ratio of polygonal ferrite is 50% or more, the yield ratio becomes 70% or less, resulting in that good deformability can be obtained.

On the other hand, for securing the strength, it is necessary to make the area ratio of polygonal ferrite become 90% or less. As shown in FIG. 3, the area ratio of polygonal ferrite is made to become 90% or less, thereby making it possible to secure the tensile strength corresponding to X70 or higher. Further, for increasing the strength to secure the tensile strength corresponding to X80 or higher, the area ratio of polygonal ferrite is preferably made to become 80% or less. Further, for more stably securing the tensile strength corresponding to X80, the area ratio of polygonal ferrite is more preferably made to become 70% or less, and the further preferable value of the area ratio is 60% or less.

Further, the area ratio of polygonal ferrite is made to become 27 to 90%, thereby improving the balance between the strength and the toughness of the steel plate. The area ratio of polygonal ferrite is made to become 20% or more, and thereby, as shown in FIG. 4, the low-temperature toughness of the steel plate improves significantly to make it possible to make the shear area at the DWTT at -60°C become 85% or more.

Further, in the metal structure of the steel plate, the balance other than polygonal ferrite is the hard phase composed of one or both of bainite and martensite. The area ratio of the hard phase becomes 10 to 73% because the area ratio of polygonal ferrite is 27 to 90%.

The bainite is defined as a structure in which carbides, retained austenite, and M-A are positioned between lath-shaped, plate-shaped, or massive bainitic ferrites or in bainitic ferrite. The martensite is a structure composed of lath-shaped or plate-shaped ferrite in which carbon is solid-dissolved in a supersaturated manner, where no carbides precipitate. The retained austenite is that austenite formed at high temperature is not $\gamma/\alpha$ transformed to be retained at room temperature.

Incidentally, the plate thickness of the high-strength steel plate of the present invention is not limited, but it is particularly effective when the plate thickness is 20 to 40 mm. Similarly, the plate thickness of the base steel plate of the high-strength steel pipe of the present invention is not limited, but it is particularly effective when the plate thickness is 20 to 40 mm.

(Metal structure of the HAZ)

Further, for obtaining good HAZ toughness at an extremely low temperature of -60°C in particular in the high-strength steel pipe of the present invention, it is important that the metal structure in a prior $\gamma$ grain in the HAZ contains the intragranular transformed structure.

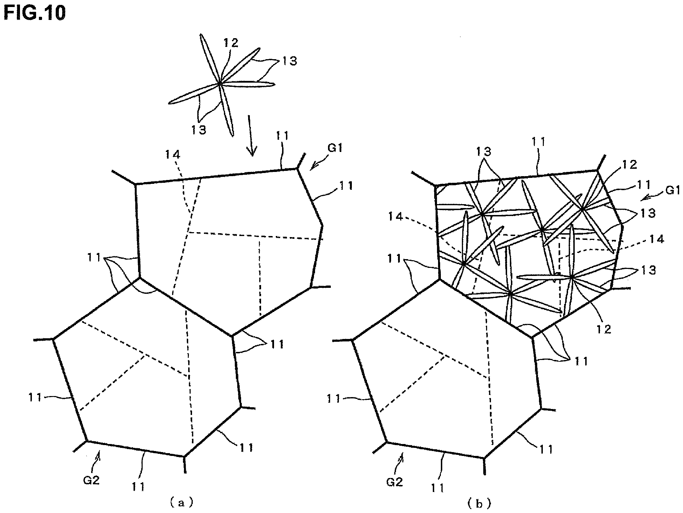

FIG. 10(a) and FIG. 10(b) are schematic views for explaining the structure of the HAZ in the high-strength steel pipe of the present invention and are views for explaining the intragranular transformed structure. FIG. 10(a) shows the state where no intragranular transformed structures 12 are contained in a prior $\gamma$ grain and FIG. 10(b) shows the state where the intragranular transformed structures 12 are contained in a prior $\gamma$ grain. As will be described later, the high-strength steel pipe of the present invention is manufactured in a manner that for example, the high-strength steel plate (base material) is formed into a pipe shape, butt portions are welded, and the pipe is expanded. On this occasion, a range from a weld metal to a predetermined distance becomes the HAZ.

In FIG. 10(a) and FIG. 10(b), each symbol 11 denotes a prior $\gamma$ (austenite) grain boundary, and a region surrounded by this prior $\gamma$ grain boundary 11 corresponds to the inside of the prior $\gamma$ grain. The prior $\gamma$ grain boundary is an austenite grain boundary formed when the base structure exposed to high temperature by welding is transformed into austenite. The inside of the prior $\gamma$ grain is $\gamma/\alpha$ transformed during a cooling process after the welding to be a structure containing the intragranular transformed structures 12.

FIG. 10(a) and FIG. 10(b) each show the metal structure of two prior $\gamma$ grains G1 and G2 being in contact with each other in the HAZ. The metal structure shown in FIG. 10(a) and FIG. 10(b) can be observed in a manner that the HAZ is etched with nital or the like to be magnified 100 times to 500 times or so by using an optical microscope or a scanning electron microscope.

In the high-strength steel pipe of the present invention, particularly Al is set to 0.005% or less, thereby making it possible to finely disperse oxides of Ti in the steel and to form the intragranular transformed structure in the prior $\gamma$ grain in the HAZ starting from the oxide of Ti (an inclusion).

Here, as shown in FIG. 10(a), in the state where the intragranular transformed structures 12 are not contained in the prior $\gamma$ grain, bainite grains and martensite grains 14 to be formed in the prior $\gamma$ grain are not divided and the crystal grain sizes in the prior $\gamma$ grain do not decrease.

In contrast to this, as shown in FIG. 10(b), in the prior $\gamma$ grain in the HAZ, a state where oxides of Ti 12 are finely dispersed is made because the amount of Al is decreased and an appropriate amount of Ti is added. (Incidentally, the oxides of Ti 12 are extremely fine).

Here, the metal structure of the base material heated up to a $\gamma$ region by welding is transformed into austenite, and in a process of the austenite being cooled, ferrite or bainitic ferrite using the oxide of Ti 12 finely dispersed in the steel as a nucleus is formed in a radial pattern (a petal shape). The ferrite formed in a petal shape is called intragranular ferrite, and the bainite in a petal shape is called intragranular bainite. In the present invention, the intragranular ferrite and the intragranular bainite are referred to as an intragranular transformed structure 13 collectively. The intragranular transformed structures 13 have crystal orientations different from those of the bainite grains and martensite grains to be obtained normally denoted by the symbol 14, to thus divide these bainite grains and martensite grains 14, resulting in that the crystal grain sizes in the prior $\gamma$ grain decrease.

As shown in FIG. 10(b), in the high-strength steel pipe of the present invention, the intragranular transformed structures 13 divide coarse bainite structures and martensite structure (the bainite grains and martensite grains 14) in the prior $\gamma$ grain, to thereby make the HAZ structure fine overall. Incidentally, in FIG. 10(b), only in the prior $\gamma$ grain G1 on one side, the state where the bainite grains and martensite grains 14 are divided by the intragranular transformed structures 13 is shown, but in the prior $\gamma$ grain G2 on the other side as well, the state where the intragranular transformed structures 13 are formed to divide the bainite grains and martensite grains 14 is made similarly.

That is, in the high-strength steel pipe of the present invention in which Al is limited to 0.008% or less, an appropriate amount of Ti is added, and thereby oxides of Ti are finely dispersed, many intragranular transformed structures are formed in the prior $\gamma$ grains of the HAZ to divide coarse bainite (or martensite) to be formed in the prior $\gamma$ grains, and thereby the entire HAZ structure is made fine and the HAZ toughness improves.

As above, many intragranular transformed structures are desirably formed so that the high-angle grain size of the metal structure in the HAZ may become 80 $\mu$m or less. For further increasing the HAZ toughness at extremely low temperature, the high-angle grain size of the metal structure in the HAZ is preferably made to become 70 $\mu$m or less, and further preferably made to become 60 $\mu$m or less. Incidentally, as described above, the high-angle grain size is the grain size of a crystal grain regarding an interface having an angular difference of 15° or more as a grain boundary and is measured by an EBSP (Electron Back Scatter Diffraction Pattern) method. In the metal structure of the HAZ, the interface having an angular difference (the grain boundary) is defined as a high-angle grain boundary, and the maximum grain size of grain sizes of crystal grains surrounded by the high-strength grain boundary is defined as a high-angle grain size effective for the HAZ toughness (an effective crystal grain size).

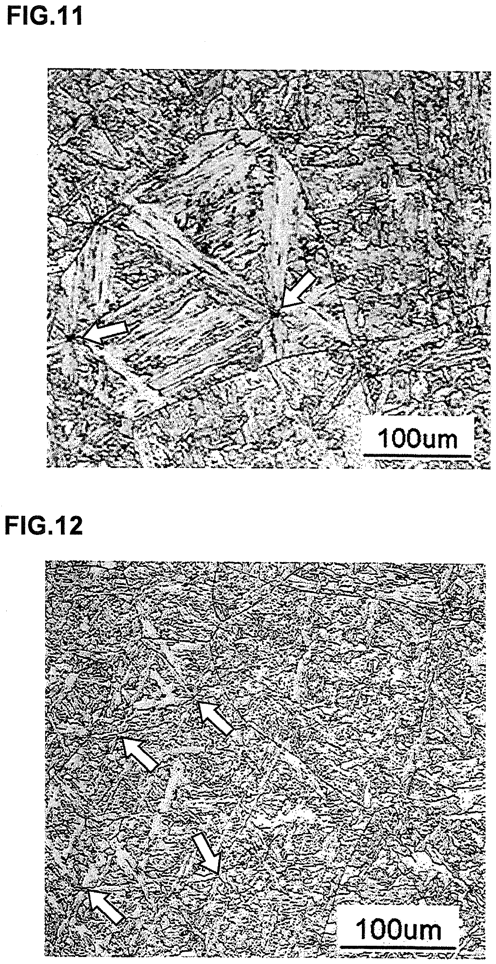

In the present invention, the $\gamma/\alpha$ transformation start temperature in the HAZ obtained by (Expression 3) above is set to 500 to 600°C, and thereby the formation of intragranular transformed structures is promoted and the high-angle grain size of the metal structure in the HAZ becomes 80 $\mu$m or less. Here, FIG. 11 is a photograph showing the metal structure of the HAZ when the $\gamma/\alpha$ transformation start temperature is higher than 600°C. Further, FIG. 12 is a photograph showing the metal structure of the HAZ when the $\gamma/\alpha$ transformation start temperature is 500 to 600°C. In each place indicated by the arrow in the drawings, the oxide of Ti to be a formation nucleus for the intragranular transformed structure exists. It is conceivable that the metal structures in FIG. 11 and FIG. 12 are substantially the same in the mount of Al, the amount of Ti, and the amount of oxygen in spite of the $\gamma/\alpha$ transformation start temperatures being different, so that they are the same also in the dispersion state of oxides of Ti. However, as shown in FIG. 11, when the $\gamma/\alpha$ transformation start temperature is higher than 600°C, the number of intragranular transformed structures to be formed is decreased and the high-angle grain size exceeds 80 $\mu$m. Incidentally, when the $\gamma/\alpha$ transformation start temperature decreases to lower than 500°C, the high-angle grain size exceeds 80 $\mu$m similarly. In contrast to this, as shown in FIG. 12, when the $\gamma/\alpha$ transformation start temperature is 500 to 600°C, the intragranular transformation is promoted to form many intragranular transformed structures, so that the high-angle grain size becomes 80 $\mu$m or less.

Further, in the high-strength steel pipe of the present invention, M-A is a structure harmful for the HAZ toughness. Therefore, M-A in the HAZ is made to become 2.5% or less in area fraction. Incidentally, for stably obtaining good HAZ toughness, M-A is preferably made to become 2.2 % or less in area fraction, and for obtaining better HAZ toughness, M-A is preferably made to become 1.7% or less, and more preferably made to become 1.3% or less.

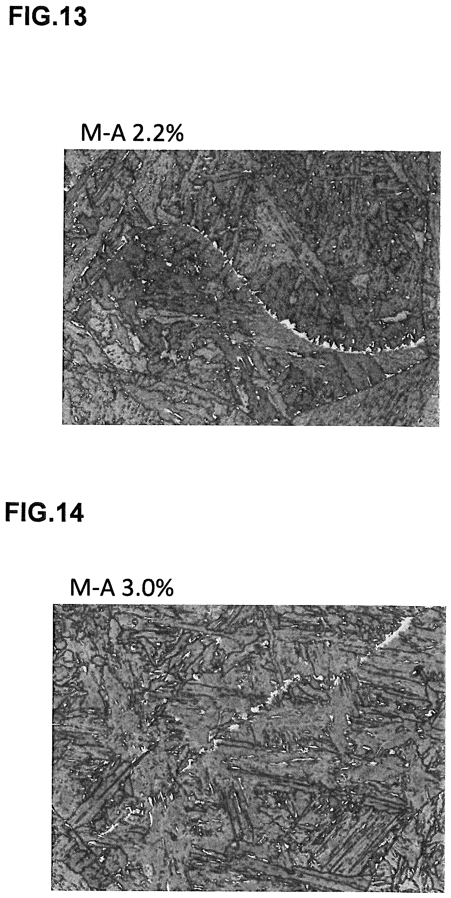

Here, FIG. 13 is a photograph showing the metal structure of the HAZ when the area fraction of M-A is 2.2%. Further, FIG. 14 is a photograph showing the metal structure of the HAZ when the area fraction of M-A is 3.0%. In FIG. 13 and FIG. 14, M-A appears as a white part. As shown in FIG. 13, when the area fraction of M-A is 2.2%, vTrs (a fracture appearance transition temperature) becomes -65°C and the low-temperature toughness at -60°C or lower is guaranteed. In contrast to this, as shown in FIG. 14, when the area fraction of M-A is 3.0%, vTrs (the fracture appearance transition temperature) becomes -55°C and the low-temperature toughness at -60°C or lower is no longer guaranteed.

Incidentally, in FIG. 13 and FIG. 14, the measurement of the fraction of M-An is performed based on area fractions obtained when the metal structure of the HAZ is observed at 500 magnifications by using an optical microscope.

Incidentally, when the tensile strength of the base steel plate is 500 to 800 MPa under the condition that the circumference direction of the high-strength steel pipe in the present invention is set to the tensile direction, the effect of the present invention can be more enjoyed.

(Manufacturing method)

Next, there will be explained manufacturing methods of the high-strength steel plate and the high-strength steel pipe of the present invention. First, a steel slab composed of the above-described chemical composition is heated to 950°C or higher, is subjected to hot rolling at $Ar_3$ or higher, and then is slowly cooled to be subjected to accelerated cooling down to a temperature of Bs or lower obtained by (Expression 4) below from a temperature of $Ar_3$ - 100°C to $Ar_3$ - 10°C at an average cooling rate of 10°C/s or more.

$$\text{Bs (°C)} = 830 - 270\text{C} - 90\text{Mn} - 37\text{Ni} - 70\text{Cr} - 83\text{Mo} \cdots \text{(Expression 4)}$$

Here, C, Mn, Ni, Cr, and Mo in (Expression 4) above denote the contents of the respective elements [mass%]. Ni, Cu, Cr, and Mo are calculated as 0 when the contents are 0%.

The above-described chemical composition containing B is made, and thereby the hardenability is increased to suppress the ferrite formation in the HAZ, but polygonal ferrite to improve the deformability and the low-temperature toughness can be formed in the high-strength steel plate to be the base material. According to the present invention in particular, by selecting hardenability improving elements other than Mo as a third element to be added with B, rolling at low temperature that applies a load to a rolling step is not required, and only by setting the start temperature of the accelerated cooling to be performed after the hot rolling to $Ar_3$ - 100°C to $Ar_3$ - 10°C, the area ratio of polygonal ferrite in the steel plate becomes 27 to 90%.

In the manufacturing method, a steel made of the above-described chemical composition is first melted in a steelmaking step and then is cast to form a steel slab. In the steelmaking step, a steel has Si and Mn added thereto to be subjected to weak deoxidation, and then has Ti added thereto to be melted so as to have the above-described chemical composition, and then is cast to form the steel slab. The melting and the casting of the steel may be performed by ordinary methods, but continuous casting is preferable in view of productivity. Then, the steel slab is reheated for hot rolling.

A reheating temperature at hot rolling is set to 950°C or higher. This is because hot rolling is performed at a temperature at which the structure of the steel turns to an austenite single-phase, namely in an austenite region to decrease crystal grain sizes of the base steel plate.

The upper limit of the heating temperature is not prescribed particularly, but for suppressing an increase in the effective crystal grain size, the heating temperature is preferably set to 1250°C or lower. Incidentally, for increasing the area ratio of polygonal ferrite, the upper limit of the heating temperature is preferably set to 1100°C or lower, and further preferably set to 1050°C or lower.

Next, the heated steel slab is subjected to hot rolling through a plurality of passes while controlling temperature and a reduction ratio, and after completion, is air cooled and is subjected to accelerated cooling. For decreasing the crystal grain size of the base steel plate, the reduction ratio of hot rolling in a recrystallization region of higher than 900°C is preferably set to 2.0 or more. The reduction ratio in the recrystallization region means a ratio of the plate thickness of the steel slab and the plate thickness at 900°C. Further, the hot rolling needs to be finished at the temperature of $Ar_3$ or higher at which the structure of the base material turns to an austenite single-phase. When the hot rolling is performed at lower than the temperature of $Ar_3$, the productivity decreases. Further, worked ferrite having an aspect ratio of greater than 4 is formed, a fracture form called separation is formed, and absorbed energy at a Charpy impact test decreases.

Incidentally, in the present invention, it is also possible that at the end of the hot rolling step, a rolling start temperature is set to $Ar_3$ to $Ar_3$ + 100°C and non-recrystallized $\gamma$ region rolling to be performed in a non-recrystallized $\gamma$ region at 900°C or lower is performed. In this case, when the productivity is considered, the rolling start temperature is preferably set to $Ar_3$ + 60 to $Ar_3$ + 100°C. For decreasing the effective crystal grain size of the base steel plate, the reduction ratio of the hot rolling in the non-recrystallized $\gamma$ region is preferably set to 2.5 or more, and for further decreasing the effective crystal grain size, the reduction ratio is preferably set to 3.0 or more. Incidentally, in the present invention, the reduction ratio of the non-recrystallized $\gamma$ region rolling is a ratio of the plate thickness at 900°C divided by the plate thickness obtained after the hot rolling is finished.

Incidentally, the upper limits of the reduction ratios in the non-recrystallized $\gamma$ region and the recrystallization region are not prescribed, but when the plate thickness of the steel slab before the hot rolling and the plate thickness of the steel plate after the hot rolling are considered, the upper limits are normally 12.0 or less.

In the present invention, as a third element to be added with B, selecting hardenability improving elements other than Mo is extremely important. This is because in the Mo-B compositely-added steel whose hardenability effect is greatly improved by composite addition of B and Mo, ferrite transformation is significantly delayed.

Then, as long as the elements other than Mo are selected to increase the hardenability in this manner, the formation of grain boundary ferrite in the HAZ is suppressed and the formation of polygonal ferrite in the base material is facilitated. At that time, the alloying elements other than Mo are used to bring the Ceq being an index of hardenability to the 0.30-to-0.53 range. For achieving this, in addition to C, elements such as Mn, Cr, Ni, and Cu may also be selected.

For forming polygonal ferrite in the base material, the rolling start temperature of the hot rolling is set to a low temperature of $Ar_3$ + 60°C or lower, and no strain-introducing rolling (low-temperature rolling) at a reduction ratio of 1.5 or more is required. However, the accelerated cooling after the hot rolling needs to start in the range of $Ar_3$ - 100°C to $Ar_3$ - 10°C. Thereby, the area ratio of polygonal ferrite of the steel plate to be the base material becomes 27 to 90%. Incidentally, the accelerated cooling start temperature is preferably set to be in the range of $Ar_3$ - 70°C to $Ar_3$ - 20°C.

Incidentally, before the above-described non-recrystallized $\gamma$ region rolling, recrystallization rolling may also be performed. The recrystallization rolling is rolling in the recrystallization region at higher than 900°C and non-recrystallized region rolling is rolling in a non-recrystallized region at 900°C or lower. The recrystallization rolling may also be started immediately after the steel slab is extracted from a heating furnace, so that its start temperature is not particularly prescribed. Further, rolling with a plurality of passes may also be performed while controlling temperature and a reduction ratio.

Further, for decreasing the effective crystal grain size of the steel plate, the reduction ratios in the recrystallization rolling and the non-recrystallized $\gamma$ region rolling are preferably set to 1.5 or more.

Further, after the hot rolling is finished, slow cooling is performed and then accelerated cooling is performed. For forming 27 to 90% in area ratio of polygonal ferrite, the slow cooling needs to be performed down to a temperature of lower than $Ar_3$ after the non-recrystallized $\gamma$ region rolling is finished. Thus, it is necessary to start the above-described accelerated cooling at a temperature in the range of $Ar_3$ - 100°C to $Ar_3$ - 10°C.

Further, for suppressing the formations of pearlite, coarse cementite, and coarse M-A to secure the tensile strength and the toughness, the average cooling rate of the above-described accelerated cooling needs to be set to 10°C/s or more. As above, the slow cooling is performed down to the accelerated cooling start temperature to form polygonal ferrite, and then the accelerated cooling is performed, thereby making it possible to cause bainite transformation and martensite transformation and to improve the strength and the toughness. Incidentally, the average cooling rate of the accelerated cooling is preferably set to 20°C/s or more.

Incidentally, a certain air cooling period normally exists until the accelerated cooling is started after the hot rolling. The cooling (slow cooling) down to the accelerated cooling start temperature after the hot rolling may also be performed during this air cooling period. This cooling is defined as slow cooling at an average cooling rate of less than 10°C/s. As above, the cooling until the accelerated cooling is started is defined as the slow cooling (at an average cooling rate of less than 10°C/s), thereby making it possible to form polygonal ferrite effectively.

Here, each cooling rate is defined as an average rate at the plate thickness center of the steel slab and each temperature is defined as an average temperature of the steel slab.

Further, regarding the above-described accelerated cooling, for securing the strength by suppressing the formations of pearlite, coarse cementite, and coarse M-A and forming the hard phase composed of one or both of bainite and martensite, a stop temperature of the accelerated cooling needs to be set to Bs or lower, which is obtained by (Expression 4) below. Incidentally, Bs is a bainite transformation start temperature and has been known to be decreased by the addition of the alloying elements as shown in (Expression 4) below. As long as the accelerated cooling is performed down to a temperature of Bs or lower, bainite can be formed.

$$Bs\ (°C) = 830 - 270C - 90Mn - 37Ni - 70Cr - 83Mo \cdots \text{(Expression 4)}$$

Further, the lower limit of the stop temperature of the accelerated cooling is not prescribed, and the accelerated cooling may also be performed down to room temperature. However, when the productivity and hydrogen defects are considered, the stop temperature is preferably 150°C or higher.

Further, the high-strength steel pipe of the present invention can be manufactured in a manner that the high-strength steel plate manufactured by the above-described method is used as a base material to be formed into a pipe shape by a UO, JCO, or bend roll step, butt portions are arc-welded internally and externally, and then the pipe is expanded.

Regarding the above-described arc welding, submerged-arc welding is preferably employed in view of the toughness of a weld metal and the productivity. When the high-strength steel plate having a thickness of 20 to 40 mm is used as a base material to manufacture a welded steel pipe particularly, the heat input of the submerged-arc welding to be performed internally and externally is preferably set to 3.0 to 10.0 kJ/mm. As long as the heat input is in this range, in the steel pipe of the present invention having the above-described chemical composition, the high-angle grain size of the HAZ, which is the effective crystal grain size, becomes 80 $\mu$m or less and excellent low-temperature toughness can be obtained.

Further, when the submerged-arc welding is performed internally and externally for each pass, the heat input of the internal welding and the heat input of the external welding do not have to be the same in condition, and the heat inputs may also be somewhat different.

After the arc welding, the pipe may also be expanded for improving the circularity of the steel pipe. When the circularity of the steel pipe is increased by pipe expansion, the steel pipe needs to be deformed to a plastic region, so that an expansion ratio is preferably set to 0.7% or more. Incidentally, the expansion ratio is that the value of the difference between the outer circumferential length of the steel pipe after expansion and the outer circumferential length of the steel pipe before expansion divided by the outer circumferential length of the steel pipe before expansion is expressed on a percentage basis. When the expansion ratio is set to greater than 2%, there is a risk that the base material and the weld zone both decrease in toughness due to plastic deformation. Thus, the expansion ratio is preferably set to 0.7 to 2.0%.

Further, on the weld zone and the HAZ of the obtained steel pipe, a heat treatment may also be performed. When the weld zone and the HAZ are heated to a temperature of 300 to 600°C in particular, coarse M-A formed along a prior austenite grain boundary is decomposed into bainite and fine cementite, so that the toughness improves. Incidentally, when the heating temperature is lower than 300°C, the decomposition of coarse M-A becomes sometimes insufficient to make it impossible to obtain an effect of improving the toughness sufficiently, so that the lower limit is preferably set to 300°C or higher. On the other hand, when the weld zone is heated to higher than 600°C, precipitates are sometimes formed to deteriorate the toughness of the weld metal, so that the upper limit is preferably set to 600°C or lower. When M-A formed in the HAZ is decomposed into bainite and cementite, a resultant having the same shape as that of M-A and containing fine white precipitates therein is made and can be distinguished from M-A by observation with a SEM.

Regarding the heat treatment, the weld zone and the HAZ may be heated by a burner externally, or may also be subjected to high-frequency heating. The pipe may be cooled immediately after its outer surface reaches the heat treatment temperature, but is preferably held for 1 to 600s for promoting the decomposition of M-A. However, when the cost of facilities and the productivity are considered, the time for holding is preferably set to 300s or shorter.

The high-strength steel plate according to the present invention explained above has a steel component with high hardenability in which B is added, an additive amount of Mo is limited, and further the carbon equivalent Ceq and the cracking parameter Pcm fall within the above-described ranges. Further, the metal structure is a composite structure composed of soft and fine polygonal ferrite and the hard phase composed of one or both of bainite and martensite. Therefore, the metal structure makes it possible to suppress the formation of coarse grain boundary ferrite and improve the low-temperature toughness in the HAZ and also to improve the low-temperature toughness of the base material. Further, the metal structure is a composite structure of polygonal ferrite and bainite and/or martensite, so that the yield ratio can be suppressed and excellent deformability can be obtained.

Further, the high-strength steel pipe according to the present invention uses the above-described high-strength steel plate as the base material, so that the base material toughness, the HAZ toughness, and the deformability at extremely low temperature all can be improved. Regarding the chemical composition of the high-strength steel plate to be the base material, C is decreased and further Mo is limited, and thereby the formation of M-A harmful for the low-temperature toughness is decreased. Further, by decreasing A1 and adding an appropriate amount of Ti, the intragranular transformation is promoted, and by adding an appropriate amount of B, the hardenability is increased and the formation of coarse ferrite from grain boundaries is suppressed. Further, by the addition of one or two or more of Cr, Cu, and Ni, the hardenability is increased, and by the fine intragranular transformed structures transformed at low temperature, the metal structure in the HAZ is composed of fine grains made of bainite and the intragranular transformed structure.

Further, even though the high-strength steel pipe according to the present invention has particularly a thickness of 20 mm or more and further has a thickness of 30 mm or more, excellent low-temperature toughness of the HAZ at extremely low temperatures of -40°C and further -60°C can be secured. Therefore, the high-strength steel pipe according to the present invention can be applied as a steel pipe for line pipe, particularly as a steel pipe for thick high-strength line pipe.

Further, according to the manufacturing method of the high-strength steel plate according to the present invention, controlling the conditions of the cooling to be performed after hot rolling makes it possible to form polygonal ferrite without requiring low-temperature rolling in the hot rolling step. Thereby, it becomes possible to manufacture the high-strength steel plate having improved strength and HAZ toughness and having extremely excellent deformability and low-temperature toughness as a base material portion.

Further, according to the manufacturing method of the high-strength steel plate according to the present invention, it is possible to make the chemical composition that is capable of sufficiently securing the hardenability even though the additive amount of expensive Mo is limited, and to form polygonal ferrite without performing low-temperature rolling that has been performed conventionally. Therefore, it becomes possible to suppress the alloying cost and the production cost.

Further, according to the manufacturing method of the high-strength steel pipe according to the present invention, the steel plate having the chemical composition sufficiently contributing to the hardenability is used, so that when the steel plate is welded to manufacture the steel pipe, the formation of coarse grain boundary ferrite to the HAZ can be suppressed and excellent low-temperature toughness can be secured.

Example

Hereinafter, the effect of the present invention will be explained by Examples, but the present invention is not limited to the conditions used for Examples below.

(Example 1)

Steels having chemical compositions shown in Table 1 were melted to form steel slabs each having a thickness of 240 to 300 mm by continuous casting in accordance with an ordinary method. Each steel slab plate thickness at that time is shown Table 2.

Next, these steel slabs were each heated up to a reheating temperature shown in Table 2 and then were subjected to hot rolling under conditions shown in Table 2 and were cooled to manufacture steel plates each having a final plate thickness shown in Table 2. Incidentally, rolling conditions of non-recrystallized $\gamma$ region rolling being a final step of the hot rolling of this example are shown in Table 2.

Further, in this example, the steel plates obtained after the hot rolling were each slowly cooled down to a start temperature of accelerated cooling shown in Table 2 (at an average cooling rate of less than 10°C/s), and then were cooled by water cooling under conditions of the accelerated cooling shown in Table 2. Further, $Ar_3$ of each steel type was obtained in a manner that each test piece having a height of 12 mm and having a diameter of 8 mm was cut out of the manufactured steel slabs and was subjected to a work/heat treatment simulating hot rolling to then be subjected to thermal expansion measurement.

Incidentally, regarding the chemical compositions and the manufacturing conditions shown in Table 1 and Table 2, an underline is added to each numerical value deviating from the ranges of the present invention. Further, each numerical value of the start temperature of the non-recrystallized $\gamma$ region rolling and each numerical value of the start temperature of the accelerated cooling mean the difference from $Ar_3$.

[Table 1]

| STEEL No | CHEMICAL COMPONENT (MASS%) | | | | | | | | | | | | | | | | | | Ceq | Pcm | Bs (°C) | NOTE |
|---|---|---|---|---|---|---|---|---|---|---|---|---|---|---|---|---|---|---|---|---|---|---|
| | C | Si | Mn | P | S | Al | Ti | Mo | B | O | N | Cu | Ni | Cr | V | Nb | Zr, Ta | Mg,Ca,REM, Y,Hf,Re,W | | | | |
| A | 0.029 | 0.25 | 1.88 | 0.007 | 0.0018 | <0.002 | 0.012 | | 0.0011 | 0.0015 | 0.003 | | | 0.31 | | | | | 0.40 | 0.15 | 631 | PRESENT INVENTION EXAMPLE |
| B | 0.029 | 0.25 | 1.88 | 0.007 | 0.0021 | <0.002 | 0.013 | | 0.0011 | 0.001 | 0.0034 | | | 0.31 | | 0.013 | | | 0.40 | 0.15 | 645 | |
| C | 0.028 | 0.25 | 1.85 | 0.007 | 0.0018 | <0.002 | 0.012 | | 0.0010 | 0.0015 | 0.003 | | | 0.30 | | 0.012 | | W:0.02 | 0.40 | 0.15 | 645 | |
| D | 0.036 | 0.24 | 1.90 | 0.007 | 0.0023 | <0.002 | 0.012 | | 0.0010 | 0.0016 | 0.0026 | | | 0.60 | | 0.012 | | | 0.47 | 0.17 | 645 | |
| E | 0.042 | 0.24 | 1.90 | 0.007 | 0.0023 | <0.002 | 0.012 | | 0.0010 | 0.0014 | 0.0028 | | | 0.60 | | 0.012 | | | 0.48 | 0.18 | 606 | |
| F | 0.033 | 0.25 | 1.79 | 0.007 | 0.0019 | 0.002 | 0.011 | | 0.0011 | 0.0031 | 0.0031 | 0.49 | 0.30 | | | 0.013 | | | 0.38 | 0.17 | 649 | |
| G | 0.032 | 0.25 | 1.82 | 0.007 | 0.0019 | 0.002 | 0.013 | | 0.0010 | 0.003 | 0.0032 | 0.50 | 0.30 | | 0.025 | 0.013 | Zr:0.001 | | 0.39 | 0.17 | 646 | |
| H | 0.033 | 0.25 | 1.80 | 0.007 | 0.0019 | 0.002 | 0.012 | | 0.0012 | 0.0025 | 0.003 | 0.50 | 0.30 | | | 0.013 | | Y:0.001 | 0.39 | 0.17 | 648 | |
| I | 0.033 | 0.25 | 1.80 | 0.007 | 0.0019 | 0.002 | 0.012 | | 0.0010 | 0.0015 | 0.003 | 0.50 | 0.30 | | | 0.013 | Ta:0.0003 | Ca:0.0006 REM:0.0006 | 0.39 | 0.17 | 648 | |
| J | 0.033 | 0.25 | 1.79 | 0.007 | 0.0019 | 0.002 | 0.011 | | 0.0011 | 0.002 | 0.0028 | 0.50 | 0.30 | | | 0.013 | | Hf:0.0010 Re:0.0010 | 0.38 | 0.17 | 649 | |
| K | 0.042 | 0.25 | 1.79 | 0.006 | 0.0019 | <0.002 | 0.011 | | 0.0011 | 0.0026 | 0.003 | 0.49 | 0.30 | | 0.04 | 0.013 | | | 0.39 | 0.17 | 646 | |
| L | 0.029 | 0.15 | 1.92 | 0.005 | 0.002 | 0.001 | 0.012 | | 0.0010 | 0.0028 | 0.0028 | 0.30 | 0.29 | 0.29 | | 0.014 | | | 0.45 | 0.17 | 618 | |
| M | 0.029 | 0.25 | 1.91 | 0.007 | 0.0021 | <0.002 | 0.012 | | <u>0.0001</u> | 0.0015 | 0.0032 | | | | | | | | 0.35 | 0.13 | 650 | COMPARATIVE EXAMPLE |
| N | 0.029 | 0.10 | 1.88 | 0.007 | 0.0007 | <0.002 | 0.012 | <u>0.1</u> | 0.0011 | 0.0015 | 0.0029 | | | | | 0.012 | | | 0.36 | 0.14 | 645 | |
| O | 0.043 | 0.26 | 1.81 | 0.007 | 0.0019 | <0.002 | 0.012 | <u>0.15</u> | 0.0010 | 0.0023 | 0.0038 | | | | | 0.012 | | | 0.37 | 0.16 | 643 | |

*Ceq=C+Mn/6+ (Ni+Cu) /15+ (Cr+Mo+V) /5

*Pcm=C+Si/30+ (Mn+Cu+Cr) /20+Ni/60+Mo/15+V/10+5B

*BLANK OF COMPONENT MEANS THAT ITS COMPONENT IS NOT ADDED

*UNDERLINE IN TABLE MEANS THAT NUMERICAL VALUE IS OUTSIDE RANGE OF PRESENT INVENTION

[Table 2]

| MANUFACTURE No. | STEEL No. | Ar3 (°C) | STEEL SLAB PLATE THICKNESS (mm) | REHEATING TEMPERATURE (°C) | NON-RECRYSTALLIZED γ REGION ROLLING START TEMPERATURE (°C) | REDUCTION RATIO | ACCELERATED COOLING START TEMPERATURE (°C) | STOP TEMPERATURE (°C) | COOLING RATE (°C/s) | FINAL PLATE THICKNESS (mm) | NOTE |
|---|---|---|---|---|---|---|---|---|---|---|---|
| 1 | A | 750 | 240 | 1050 | 100 | 5.5 | -20 | 200 | 20 | 20 | PRESENT INVENTION EXAMPLE |
| 2 | A | 750 | 240 | 1000 | 100 | 5.5 | -120 | 300 | 20 | 25 | COMPARATIVE EXAMPLE |
| 3 | B | 750 | 240 | 1050 | 100 | 5.5 | -20 | 200 | 20 | 20 | PRESENT INVENTION EXAMPLE |
| 4 | C | 745 | 240 | 1000 | 65 | 5.5 | -30 | 250 | 20 | 20 | PRESENT INVENTION EXAMPLE |
| 5 | D | 740 | 240 | 1000 | 80 | 4.4 | -30 | 260 | 32 | 25 | PRESENT INVENTION EXAMPLE |
| 6 | D | 740 | 300 | 1000 | 70 | 5 | -40 | 250 | 32 | 30 | PRESENT INVENTION EXAMPLE |
| 7 | E | 725 | 240 | 950 | 80 | 6 | -35 | 280 | 32 | 25 | PRESENT INVENTION EXAMPLE |
| 8 | E | 725 | 240 | 1000 | 90 | 4.4 | 0 | 320 | 32 | 25 | COMPARATIVE EXAMPLE |
| 9 | F | 750 | 240 | 1000 | 70 | 4.4 | -40 | 320 | 29 | 25 | PRESENT INVENTION EXAMPLE |
| 10 | G | 750 | 240 | 1000 | 100 | 5.5 | -45 | 210 | 24 | 20 | PRESENT INVENTION EXAMPLE |
| 11 | H | 745 | 300 | 950 | 70 | 5 | -45 | 230 | 28 | 30 | PRESENT INVENTION EXAMPLE |
| 12 | I | 750 | 300 | 1080 | 80 | 6 | -40 | 250 | 30 | 25 | PRESENT INVENTION EXAMPLE |
| 13 | J | 750 | 240 | 1000 | 70 | 4.4 | -40 | 310 | 30 | 25 | PRESENT INVENTION EXAMPLE |
| 14 | J | 750 | 240 | 1000 | 70 | 4.4 | -5 | 310 | 30 | 25 | COMPARATIVE EXAMPLE |
| 15 | K | 725 | 300 | 950 | 75 | 6 | -35 | 235 | 32 | 25 | PRESENT INVENTION EXAMPLE |
| 16 | L | 720 | 240 | 950 | 100 | 4 | -40 | 400 | 28 | 25 | PRESENT INVENTION EXAMPLE |
| 17 | M | 765 | 240 | 1050 | 85 | 5 | -25 | 320 | 21 | 25 | COMPARATIVE EXAMPLE |
| 18 | N | 760 | 240 | 1050 | 80 | 5 | -50 | 265 | 22 | 30 | PRESENT INVENTION EXAMPLE |
| 19 | O | 755 | 240 | 1000 | 95 | 6 | -50 | 260 | 33 | 25 | COMPARATIVE EXAMPLE |

**REDUCTION RATIO MEANS (PLATE THICKNESS BEFORE NON-RECRYSTALLIZED γ REGION ROLLING START) / (FINAL PLATE THICKNESS)

*EACH NUMERICAL VALUE OF ROLLING FINISH TEMPERATURE, ACCELERATED COOLING START TEMPERATURE, AND STOP TEMPERATURE MEANS DIFFERENCE FROM Ar3

*UNDERLINE IN TABLE MEANS THAT NUMERICAL VALUE IS OUTSIDE RANGE OF PRESENT INVENTION

Microstructures of plate thickness center portions of the steel plates manufactured as above were observed with an optical microscope to measure their area ratios of polygonal ferrite and their area ratios of a hard phase composed of bainite and martensite as their balance.

Further, from each of the steel plates, a press-notched test piece having a notch provided therein in parallel to the plate thickness direction was fabricated with the plate width direction set as the longitudinal direction based on API, 5L3, ASTM, and E436, and was subjected to a drop weight tear test (DWTT). The DWTT was performed at -60°C, and each shear area (SA) was obtained and each low-temperature toughness was evaluated. Further, each tensile property was evaluated in a manner that a test piece of the API specification was used to be subjected to a tensile test to obtain a tensile strength. Further, based on the result obtained by the tensile test, each yield ratio (yield strength/tensile strength) was calculated to evaluate deformability.

Incidentally, the tensile property was evaluated to be good in the case of X70 or higher (the tensile strength of 570 MPa or more), the deformability was evaluated to be good in the case of the yield ratio of 80% or less, and the low-temperature toughness was evaluated to be good in the case of SA of 85% or more.

Results are shown in Table 3.

[Table 3]

| MANUFAC TURE No. | STEEL No. | AREA RATIO OF METAL STRUCTURE (%) | | TENSILE STRENGTH (MPa) | YIELD RATIO (%) | SEAR AREA SA (%) | NOTE |
|---|---|---|---|---|---|---|---|
| | | POLYGONAL FERRITE | HARD PHASE | | | | |
| 1 | A | 50 | 50 | 575 | 76 | 87 | PRESENT INVENTION EXAMPLE |
| 2 | A | 95 | 5 | 555 | 65 | 91 | COMPARATIVE EXAMPLE |
| 3 | B | 40 | 60 | 605 | 76 | 85 | PRESENT INVENTION EXAMPLE |
| 4 | C | 60 | 40 | 580 | 69 | 86 | |
| 5 | D | 69 | 31 | 650 | 62 | 90 | |
| 6 | D | 71 | 29 | 645 | 63 | 91 | |
| 7 | E | 59 | 41 | 716 | 63 | 85 | |
| 8 | E | 10 | 90 | 725 | 82 | 45 | COMPARATIVE EXAMPLE |
| 9 | F | 72 | 28 | 626 | 66 | 90 | PRESENT INVENTION EXAMPLE |
| 10 | G | 73 | 27 | 615 | 67 | 92 | |
| 11 | H | 68 | 32 | 620 | 66 | 91 | |
| 12 | I | 75 | 25 | 633 | 65 | 92 | |
| 13 | J | 69 | 31 | 628 | 67 | 90 | |
| 14 | J | 12 | 88 | 675 | 82 | 43 | COMPARATIVE EXAMPLE |
| 15 | K | 60 | 40 | 635 | 68 | 85 | PRESENT INVENTION EXAMPLE |
| 16 | L | 47 | 53 | 605 | 76 | 91 | |
| 17 | M | 97 | 3 | 540 | 65 | 93 | COMPARATIVE EXAMPLE |
| 18 | N | 0 | 100 | 585 | 83 | 0 | |
| 19 | O | 15 | 85 | 695 | 81 | 56 | |

*UNDERLINE IN TABLE MEANS THAT NUMERICAL VALUE IS OUTSIDE RANGE OF PRESENT INVENTION

Manufacture No. 1, 3 to 7, 9 to 13, 15, and 16 shown in Table 3 are present invention examples, where polygonal ferrite having an aspect ratio of 1 to 4 is 27 to 90% in area ratio. These are steel plates excellent in deformability and low-temperature toughness, in which tensile strengths of X70 or higher and further X80 or higher are satisfied, the area ratio of polygonal ferrite is 27% or more, the yield ratio is 80% or less, and SA at the DWTT is 85% or more. Further, they are steel plates excellent in deformability and low-temperature toughness, in which the area ratio of polygonal ferrite is 50% or more and the yield ratio is 70% or less.

These steel plates were each formed into a pipe by a UO step, butt portions of each of the pipes were submerged-arc welded internally and externally, the pipes were each expanded, and steel pipes were manufactured. Of these steel pipes, each metal structure was the same as that of each of the steel plates, each tensile strength was the same as that of each of the steel plates or was higher than that of each of the steel plates by 5 to 20 MPa, and each low-temperature toughness was the same as that of each of the steel plates. Each yield ratio of the steel pipes became higher than that of each of the steel plates by 6 to 17% due to work hardening when the pipe was formed, but was able to be suppressed to 72 to 85%, which was lower than 93% being the maximum yield ratio prescribed in X70 to X80 of the API specification, and regarding the deformability as well, good results were able to be obtained.

On the other hand, Manufacture No. 2 shown in Table 3 is an example, in which the accelerated cooling start temperature is low, the area ratio of polygonal ferrite increases excessively, and the strength decreases to less than X70.

Manufacture No. 8 and 14 each are an example, in which the accelerated cooling start temperature is high, the area ratio of polygonal ferrite decreases, the yield ratio increases, and the shear area decreases.

Further, Manufacture No. 17 to 19 shown in Table 3 each are a comparative example, in which the chemical composition is outside the range of the present invention. Manufacture 17 is an example, in which the amount of B is small, polygonal ferrite increases, and the tensile strength decreases. Manufacture No. 18 and 19 each are an example, in which the amount of Mo is large, polygonal ferrite decreases, and the deformability and the low-temperature toughness decrease.

(Example 2)

The concentration of oxygen in adding Ti was adjusted to be in the 0.001-to-0.003% range, and steels having chemical compositions shown in Table 4 and Table 5 were each melted in a steelmaking step and then were cast to form steel slabs. The melting and the casting of the steel may be performed by ordinary methods, or may also be performed by continuous casting in view of the productivity. In this example, melting and casting of the steel were performed by continuous casting.

Next, the obtained steel slabs were each reheated to 950°C or higher for hot rolling to then be hot rolled at 700°C or higher, and then were water-cooled at an average cooling rate of 10°C/s or more to manufacture steel plates. Incidentally, in the hot rolling of this example, the reduction ratio of rolling in a recrystallization region was set to be in the 0-to-3 range and the reduction ratio of rolling in a non-recrystallized region was set to be in the 2-to-9 range.

Incidentally, regarding the chemical compositions shown in Table 4 and Table 5, an underline is added to each numeral value deviating from the ranges of the present invention.

[Table 4]

EP 2 799 567 B1

| STEEL No. | CHEMICAL COMPONENT (MASS%) | | | | | | | | | | | | | | | | | |
|---|---|---|---|---|---|---|---|---|---|---|---|---|---|---|---|---|---|---|
| | C | Si | Mn | P | S | Al | Ti | B | O | N | Mo | Cr | Cu | Ni | V | Nb | Zr, Ta | Mg, Ca, REM, Y, Hf, Re, W |
| A | 0.032 | 0.25 | 2.20 | 0.007 | 0.0021 | <0.002 | 0.013 | 0.0011 | 0.0015 | 0.0032 | | | | | | | | |
| B | 0.029 | 0.25 | 1.88 | 0.007 | 0.0021 | 0.002 | 0.013 | 0.0011 | 0.0017 | 0.0034 | | 0.31 | | | | | | |
| C | 0.030 | 0.24 | 1.88 | 0.007 | 0.0018 | <0.002 | 0.012 | 0.0010 | 0.0020 | 0.0031 | 0.01 | 0.30 | | | | | | W:0.01 |
| D | 0.028 | 0.24 | 1.87 | 0.006 | 0.0015 | 0.002 | 0.012 | 0.0006 | 0.0015 | 0.0033 | | 0.60 | | | | | | |
| E | 0.029 | 0.25 | 1.88 | 0.007 | 0.0021 | 0.002 | 0.013 | 0.0011 | 0.0015 | 0.0032 | | 0.61 | | | | 0.013 | | |
| F | 0.028 | 0.25 | 1.88 | 0.007 | 0.0018 | <0.002 | 0.012 | 0.0010 | 0.0018 | 0.0025 | | 0.60 | | | | 0.012 | Zr:0.04 | |
| G | 0.028 | 0.15 | 1.88 | 0.007 | 0.0018 | 0.004 | 0.011 | 0.0010 | 0.0015 | 0.0028 | | 0.57 | | | | 0.012 | | Mg:0.002 |
| H | 0.026 | 0.25 | 1.89 | 0.008 | 0.0022 | <0.002 | 0.001 | 0.0010 | 0.0016 | 0.0054 | | 0.61 | | | | 0.011 | | |
| I | 0.028 | 0.25 | 1.88 | 0.008 | 0.0025 | <0.002 | 0.020 | 0.0009 | 0.0016 | 0.0042 | | 0.61 | | | | 0.012 | | |
| J | 0.028 | 0.24 | 1.88 | 0.008 | 0.0019 | <0.002 | 0.015 | 0.0022 | 0.0018 | 0.0059 | | 0.60 | | | | 0.011 | | |
| K | 0.045 | 0.25 | 1.82 | 0.007 | 0.0019 | <0.002 | 0.012 | 0.0100 | 0.0017 | 0.0030 | | | | 0.60 | | 0.012 | | |
| L | 0.043 | 0.25 | 1.80 | 0.007 | 0.0019 | <0.002 | 0.012 | 0.0100 | 0.0017 | 0.0030 | | | | 0.80 | | 0.012 | | |
| M | 0.030 | 0.25 | 1.82 | 0.008 | 0.0023 | 0.002 | 0.013 | 0.0012 | 0.0017 | 0.0026 | | | 0.50 | 0.30 | | 0.012 | | |
| N | 0.032 | 0.25 | 1.82 | 0.008 | 0.0023 | 0.002 | 0.013 | 0.0012 | 0.0017 | 0.0026 | | | 0.50 | 0.30 | | 0.012 | | Ca:0.0006 REM:0.0006 |
| O | 0.035 | 0.25 | 1.82 | 0.008 | 0.0023 | 0.003 | 0.013 | 0.0012 | 0.0017 | 0.0026 | | | 0.50 | 0.30 | | 0.012 | | Hf:0.0010 Re:0.0010 |
| P | 0.032 | 0.25 | 1.82 | 0.008 | 0.0023 | 0.002 | 0.013 | 0.0012 | 0.0017 | 0.0026 | | | 0.50 | 0.30 | | 0.012 | Ta:0.0003 | |
| Q | 0.030 | 0.25 | 1.82 | 0.008 | 0.0023 | 0.002 | 0.013 | 0.0012 | 0.0032 | 0.0032 | | | 0.50 | 0.30 | 0.01 | 0.012 | | Ca:0.0006 REM:0.0006 |
| R | 0.043 | 0.28 | 1.77 | 0.007 | 0.0018 | 0.002 | 0.016 | 0.0015 | 0.0017 | 0.0019 | | | 0.48 | 0.29 | | 0.012 | | |
| S | 0.048 | 0.25 | 1.80 | 0.006 | 0.0020 | <0.002 | 0.012 | 0.0010 | 0.0018 | 0.0028 | | | 0.47 | 0.30 | | 0.011 | | |
| T | 0.033 | 0.24 | 1.89 | 0.007 | 0.0018 | <0.002 | 0.013 | 0.0002 | 0.0014 | 0.0026 | | 0.59 | | | | 0.013 | | |
| U | 0.030 | 0.06 | 1.88 | 0.002 | 0.0010 | 0.05 | 0.012 | 0.0010 | 0.0015 | 0.0028 | | | 0.50 | 0.30 | | 0.012 | | |
| V | 0.042 | 0.25 | 1.89 | 0.007 | 0.0022 | <0.002 | 0.012 | 0.0012 | 0.0013 | 0.0030 | 0.15 | 0.03 | | | | 0.012 | | |
| W | 0.029 | 0.10 | 1.88 | 0.007 | 0.0007 | <0.002 | 0.012 | 0.0007 | 0.0025 | 0.0028 | | | | | | 0.012 | | |
| X | 0.053 | 0.25 | 2.10 | 0.010 | 0.0025 | 0.005 | 0.015 | 0.0010 | 0.0017 | 0.0028 | | 0.60 | | | 0.03 | 0.012 | | |

*Pcm=C+Si/30+(Mn+Cu+Cr)/20+Ni/60+Mo/15+V/10+5B

* γ / α TRANSFORMATION TEMPERATURE = -2500Ceq² + 1560Ceq + 370

*Ceq=C+Mn/6+(Ni+Cu)/15+(Cr+Mo+V)/5

*Pcm=C+Si/30+(Mn+Cu+Cr)/20+Ni/60+Mo/15+V/10+5B

*BLANK OF COMPONENT MEANS THAT ITS COMPONENT IS NOT ADDED

*UNDERLINE IN TABLE MEANS THAT NUMERICAL VALUE IS OUTSIDE RANGE OF PRESENT INVENTION

[Table 5]

| STEEL No. | Pcm | $\gamma/\alpha$ TRANSFORMATION START TEMPERATURE | Ceq | NOTE |
|---|---|---|---|---|
| A | 0.16 | 595 | 0.40 | PRESENT INVENTION EXAMPLE |
| B | 0.15 | 592 | 0.40 | PRESENT INVENTION EXAMPLE |
| C | 0.15 | 593 | 0.40 | PRESENT INVENTION EXAMPLE |
| D | 0.16 | 559 | 0.46 | PRESENT INVENTION EXAMPLE |
| E | 0.17 | 555 | 0.46 | PRESENT INVENTION EXAMPLE |
| F | 0.17 | 558 | 0.46 | PRESENT INVENTION EXAMPLE |
| G | 0.16 | 562 | 0.46 | PRESENT INVENTION EXAMPLE |
| H | 0.16 | 556 | 0.46 | PRESENT INVENTION EXAMPLE |
| I | 0.17 | 556 | 0.46 | PRESENT INVENTION EXAMPLE |
| J | 0.17 | 558 | 0.46 | PRESENT INVENTION EXAMPLE |
| K | 0.20 | 599 | 0.39 | PRESENT INVENTION EXAMPLE |
| L | 0.20 | 596 | 0.40 | PRESENT INVENTION EXAMPLE |
| M | 0.17 | 599 | 0.39 | PRESENT INVENTION EXAMPLE |
| N | 0.17 | 599 | 0.39 | PRESENT INVENTION EXAMPLE |
| O | 0.17 | 597 | 0.39 | PRESENT INVENTION EXAMPLE |
| P | 0.17 | 599 | 0.39 | PRESENT INVENTION EXAMPLE |
| Q | 0.17 | 599 | 0.39 | PRESENT INVENTION EXAMPLE |
| R | 0.18 | 598 | 0.39 | PRESENT INVENTION EXAMPLE |
| S | 0.18 | 594 | 0.40 | PRESENT INVENTION EXAMPLE |
| T | 0.17 | 554 | 0.47 | COMPARATIVE EXAMPLE |
| U | 0.16 | 595 | 0.40 | COMPARATIVE EXAMPLE |
| V | 0.16 | 597 | 0.39 | COMPARATIVE EXAMPLE |
| W | 0.13 | <u>611</u> | 0.34 | COMPARATIVE EXAMPLE |
| X | 0.20 | <u>496</u> | 0.53 | COMPARATIVE EXAMPLE |

\*Pcm=C+Si／30+(Mn+Cu+Cr)／20+Ni／60+Mo／15+V／10+5B

\* $\gamma/\alpha$ TRANSFORMATION TEMPERATURE = $-2500Ceq^2 + 1560Ceq + 370$

\*Ceq=C+Mn／6+(Ni+Cu)／15+(Cr+Mo+V)／5

\*Pcm=C+Si／30+(Mn+Cu+Cr)／20+Ni／60+Mo／15+V／10+5B

\*BLANK OF COMPONENT MEANS THAT ITS COMPONENT IS NOT ADDED

\*UNDERLINE IN TABLE MEANS THAT NUMERICAL VALUE IS OUTSIDE RANGE OF PRESENT INVENTION

Next, a 12 mm square steel piece having a length of 120 mm was cut out of each of the obtained steel plates and was subjected to a HAZ simulated thermal cycle treatment simulating a HAZ that was submerged-arc welded while changing the plate thickness in the 20-to-40 mm range and changing the welding heat input in the 3.0-to-10.0 kJ/mm range. Heating may be performed by dielectric heating, induction heating, or high-frequency heating, and cooling may be performed by water, He gas, nitrogen gas, or the like. In this example, the heating of the HAZ simulated thermal cycle treatment was performed by heating at 1400°C, and the cooling was performed by He gas or nitrogen gas.

Incidentally, on Manufacture No. 6, 10, 11, 12, 18, and 19 shown in Table 6, tempering with heat treatment temperatures shown in Table 6 set as the maximum was performed after the HAZ simulated thermal cycle treatment.

From each of the steel pieces having been subjected to the HAZ simulated thermal cycle treatment, a test piece for microstructure observation was taken and was etched and then had its structure observed by using an optical microscope or a SEM to measure an area fraction of M-A in a HAZ. Here, an intragranular transformed structure was defined as ferrite or bainite formed in a petal shape starting from an inclusion.

Further, by an EBSP method, an interface having an angular difference of 15° was defined as a high-angle grain boundary and a high-angle grain size was measured. Further, from each of the steel pieces having been subjected to the HAZ simulated thermal cycle treatment, a V-notch Charpy impact test piece was taken and was subjected to a Charpy impact test at -60°C. Charpy absorbed energy was measured based on JIS Z 2242.

Results of the above are shown in Table 6.

Incidentally, in Table 6, the tensile strength of the base steel plate is a tensile strength obtained when the width direction of the steel plate is set to the tensile direction and the tensile strength of the base steel pipe is a tensile strength obtained when the circumference direction of the steel pipe is set to the tensile direction. Further, the yield ratio of the steel pipe is a yield ratio (a ratio of yield strength and tensile strength) obtained when the longitudinal direction (the rolling direction) of the steel pipe is set to the tensile direction. In each of Manufacture No. 1 to 24 shown in Table 6, the strength was X70 or higher (the tensile strength was 570 MPa or more). Further, also in each of Manufacture No. 1 to 24 shown in Table 6, the yield ratio was 72 to 85%, which was lower than 93%.

Further, regarding the evaluation of the low-temperature toughness in the HAZ, the low-temperature toughness in the HAZ was evaluated to be good in the case of the Charpy absorbed energy (vE-60) of 50 J or more.

[Table 6]

| MANUFACTURE No. | STEEL No. | PLATE THICKNESS mm | TENSILE STRENGTH OF BASE STEEL PLATE MPa | TENSILE STRENGTH OF STEEL PIPE MPa | YIELD RATIO OF STEEL PIPE % | HEAT INPUT (kJ/mm) | HEAT TREATMENT TEMPERATURE (°C) | HARDNESS Hv | METAL STRUCTURE OF HAZ — M-A AREA FRACTION % | METAL STRUCTURE OF HAZ — EXISTENCE/NON-EXISTENCE OF GRAIN BOUNDARY FERRITE | METAL STRUCTURE OF HAZ — EXISTENCE/NON-EXISTENCE OF INTRAGRANULAR TRANSFORMED STRUCTURE | METAL STRUCTURE OF HAZ — HIGH-ANGLE GRAIN SIZE (μm) | HAZ TOUGHNESS vE-60 (J) | NOTE |
|---|---|---|---|---|---|---|---|---|---|---|---|---|---|---|
| 1 | A | 22 | 640 | 652 | 72 | 3.3 | | 205 | 1.09 | NONE | EXISTENCE | 78 | 384 | |
| 2 | B | 30 | 580 | 595 | 82 | 5.1 | | 203 | 1.11 | NONE | EXISTENCE | 77 | 398 | PRESENT INVENTION |
| 3 | C | 25 | 605 | 619 | 79 | 4.0 | | 204 | 1.21 | NONE | EXISTENCE | 75 | 221 | |
| 4 | D | 30 | 620 | 636 | 81 | 3.3 | | 205 | 1.33 | NONE | EXISTENCE | 70 | 236 | |
| 5 | E | 25 | 640 | 655 | 74 | 3.3 | | 208 | 1.20 | NONE | EXISTENCE | 57 | 366 | |
| 6 | F | 35 | 610 | 627 | 83 | 5.1 | 600 | 208 | 1.17 | NONE | EXISTENCE | 67 | 328 | |
| 7 | G | 25 | 630 | 644 | 77 | 3.3 | | 205 | 1.05 | NONE | EXISTENCE | 65 | 332 | |
| 8 | H | 30 | 590 | 605 | 82 | 4.0 | | 200 | 1.08 | NONE | EXISTENCE | 57 | 102 | |
| 9 | I | 30 | 585 | 600 | 80 | 4.0 | | 210 | 1.18 | NONE | EXISTENCE | 75 | 116 | |
| 10 | J | 30 | 580 | 595 | 79 | 5.1 | 450 | 208 | 1.11 | NONE | EXISTENCE | 68 | 274 | |
| 11 | K | 32 | 670 | 688 | 79 | 5.1 | 300 | 215 | 1.20 | NONE | EXISTENCE | 75 | 333 | |
| 12 | L | 30 | 680 | 697 | 80 | 5.1 | 500 | 212 | 1.32 | NONE | EXISTENCE | 70 | 151 | |
| 13 | M | 22 | 730 | 745 | 68 | 3.3 | | 208 | 1.10 | NONE | EXISTENCE | 60 | 310 | |
| 14 | N | 25 | 670 | 685 | 78 | 3.6 | | 208 | 1.12 | NONE | EXISTENCE | 74 | 312 | |
| 15 | O | 30 | 626 | 642 | 80 | 5.3 | | 208 | 1.30 | NONE | EXISTENCE | 73 | 298 | |
| 16 | P | 38 | 580 | 597 | 85 | 6.7 | | 208 | 1.20 | NONE | EXISTENCE | 77 | 301 | |
| 17 | Q | 25 | 745 | 762 | 75 | 5.1 | 600 | 210 | 1.17 | NONE | EXISTENCE | 79 | 142 | |
| 18 | R | 32 | 620 | 636 | 77 | 5.1 | | 214 | 1.48 | NONE | EXISTENCE | 58 | 216 | |
| 19 | S | 25 | 653 | 668 | 76 | 3.3 | 300 | 218 | 1.50 | NONE | EXISTENCE | 55 | 132 | |
| 20 | T | 30 | 580 | 595 | 76 | 5.1 | | 198 | 1.03 | EXISTENCE | EXISTENCE | 141 | 24 | COMPARATIVE EXAMPLE |
| 21 | U | 25 | 628 | 642 | 72 | 4.0 | | 210 | 0.78 | NONE | NONE | 133 | 41 | |
| 22 | V | 30 | 653 | 670 | 79 | 5.1 | | 208 | 2.90 | NONE | EXISTENCE | 78 | 37 | |
| 23 | W | 30 | 673 | 690 | 80 | 5.1 | | 191 | 1.05 | NONE | EXISTENCE | 112 | 21 | |
| 24 | X | 25 | 740 | 757 | 78 | 5.1 | | 210 | 1.67 | NONE | EXISTENCE | 85 | 42 | |

*HARDNESS IS VICKERS HARDNESS OF HAZ
*HAZ TOUGHNESS IS CHARPY ABSORBED ENERGY AT -60
*UNDERLINE IN TABLE MEANS THAT NUMERICAL VALUE IS OUTSIDE RANGE OF PRESENT INVENTION
*TENSILE STRENGTH USED FOR MEASURING YIELD RATIO OF STEEL PIPE IS MEASURED ON ALL THICK TEST PIECES WORKED IN STEEL PIPE LONGITUDINAL DIRECTION AT POSITION 90 DEGREES FROM SEAM WELDING

Manufacture No. 2 to 19 shown in Table 6 are present invention examples, in which the metal structure of the HAZ is a microstructure composed of bainite and intragranular transformed structure having a high-angle grain size of 80 μm or less in which M-A and coarse grain boundary ferrite are suppressed and intragranular transformed structures are confirmed. Regarding the Charpy absorbed energy of them, the value of 50 J or more is exhibited even at an extremely low temperature of -60°C in all the cases. Manufacture No. 1 is a reference example.

On the other hand, in Manufacture No. 20 to 24 shown in Table 6, the chemical composition of the base steel plate or the $\gamma/\alpha$ transformation start temperature is outside the range of the present invention, and these are comparative examples.

Manufacture No. 20 is an example, in which the amount of B is small and the hardenability decreases, and as a result, grain boundary ferrite is formed, the high-angle grain size increases, and the HAZ toughness decreases.

Manufacture No. 21 is an example, in which the amount of A1 is large and no formation of intragranular transformed structures by oxides of Ti is obtained, and as a result, the high-angle grain size increases and the HAZ toughness decreases.

Further, Manufacture No. 22 shown in Table 6 is an example, in which the chemical composition is in the range of Patent Document 7, grain boundary ferrite is suppressed, and intragranular transformed structures are obtained, but the additive amount of Mo is excessive and thus the area fraction of M-A being a hard phase exceeds 2.5% and the absorbed energy decreases.

In Manufacture No. 23 and 24, the chemical composition used in Patent Document 8 is applied, grain boundary ferrite is suppressed, and the area fraction of M-A is low, and Manufacture No. 23 is an example, in which the $\gamma/\alpha$ transformation start temperature is high and thus formed intragranular transformed structures are few as compared to the present invention, the high-angle grain size increases, and the HAZ toughness decreases. Manufacture No. 24 is an example, in which the $\gamma/\alpha$ transformation start temperature is low, and thus no intragranular transformed structures are obtained and the HAZ toughness decreases.

**Claims**

1.  A high-strength steel plate excellent in deformability and low-temperature toughness, comprising:

    in mass%,
    C: 0.010 to 0.080%;
    Si: 0.01 to 0.50%;
    Mn: 1.2 to 2.8%;
    S: 0.0001 to 0.0050%;
    Ti: 0.003 to 0.030%;
    B: 0.0003 to 0.005%;
    N: 0.0010 to 0.008%;
    O: 0.0001 to 0.0080%;
    one or more of Cr, Cu, and Ni;
    P: limited to 0.050% or less;
    Al: limited to 0.020% or less;
    Mo: limited to 0.03% or less;
    a Ceq obtained by (Expression 1) below of 0.30 to 0.53; and a Pcm obtained by (Expression 2) below of 0.10 to 0.20; and
    a balance being composed of iron and inevitable impurities; wherein
    a metal structure contains 27 to 90% in area ratio of polygonal ferrite and a hard phase composed of one or both of bainite and martensite as its balance.

$$Ceq = C + Mn/6 + (Ni + Cu)/15 + (Cr + Mo)/5 \cdots (\text{Expression 1})$$

$$Pcm = C + Si/30 + (Mn + Cu + Cr)/20 + Ni/60 + Mo/15 + 5B \cdots (\text{Expression 2})$$

In (Expression 1) and (Expression 2) above, C, Si, Mn, Ni, Cu, Cr, Mo, and B denote the contents of the respective elements [mass%]. Ni, Cu, Cr, and Mo are calculated as 0 when the respective contents are 0%, wherein the high-strength steel plate excellent in deformability and low-temperature toughness optionally further comprises:

one or two or more of, in mass%,

W: 0.01 to 0.50%;
V: 0.010 to 0.100%;
Nb: 0.001 to 0.200%;
Zr: 0.0001 to 0.0500%;
Ta: 0.0001 to 0.0500%;
Mg: 0.0001 to 0.0100%;
Ca: 0.0001 to 0.0050%;
REM: 0.0001 to 0.0050%;
Y: 0.0001 to 0.0050%;
Hf: 0.0001 to 0.0050%; and
Re: 0.0001 to 0.0050%; wherein

the Ceq is obtained by (Expression 1') below in place of (Expression 1) above, and
the Pcm is obtained by (Expression 2') below in place of (Expression 2).

$$Ceq = C + Mn/6 + (Ni + Cu)/15 + (Cr + Mo + V)/5 \cdots \text{(Expression 1')}$$

$$Pcm = C + Si/30 + (Mn + Cu + Cr)/20 + Ni/60 + Mo/15 + V/10 + 5B \cdots$$

$$\text{(Expression 2')}$$

In (Expression 1') and (Expression 2') above, C, Si, Mn, Ni, Cu, Cr, Mo, V, and B denote the contents of the respective elements [mass%]. Ni, Cu, Cr, and Mo are calculated as 0 when the respective contents are 0%. V is calculated as 0 when the content is 0% and the content is less than 0.010 mass%.

2. The high-strength steel plate excellent in deformability and low-temperature toughness according to claim 1, wherein in mass%, the content of C is 0.010 to 0.060% and the content of A1 is 0.008% or less, and a $\gamma/\alpha$ transformation start temperature in a heat affected zone that is obtained by (Expression 3) below is 500 to 600°C.

$$\gamma/\alpha \text{ transformation start temperature} = -2500Ceq^2 + 1560Ceq + 370 \cdots$$

$$\text{(Expression 3).}$$

3. A high-strength steel pipe excellent in deformability and low-temperature toughness being a steel pipe obtained from a base steel plate formed into a pipe shape and being welded, wherein
the base steel plate is the steel plate according to claim 1 or 2.

4. The high-strength steel pipe excellent in deformability and low-temperature toughness according to claim 3, wherein of the steel base plate, in mass%, the content of C is 0.010 to 0.060% and the content of Al is 0.008% or less, a $\gamma/\alpha$ transformation start temperature in a heat affected zone that is obtained by (Expression 3) below is 500 to 600°C, and
intragranular transformed structures are contained in a prior $\gamma$ grain in the heat affected zone.

$$\gamma/\alpha \text{ transformation start temperature} = -2500Ceq^2 + 1560Ceq + 370 \cdots$$

$$\text{(Expression 3).}$$

5. The high-strength steel pipe excellent in deformability and low-temperature toughness according to claim 4, wherein a martensite-austenite constituent in the heat affected zone is 2.5% or less in area fraction.

6. The high-strength steel pipe excellent in deformability and low-temperature toughness according to claim 4, wherein a high-angle grain size of a metal structure in the heat affected zone is 80 $\mu$m or less.

7. The high-strength steel pipe excellent in deformability and low-temperature toughness according to claim 3 or 4, wherein
a plate thickness of the base steel plate is 20 to 40 mm.

8. The high-strength steel pipe excellent in deformability and low-temperature toughness according to claim 3 or 4, wherein
a tensile strength of the base steel plate is 500 to 800 MPa when the circumference direction of the steel pipe is set to the tensile direction.

9. A manufacturing method of a high-strength steel plate excellent in deformability and low-temperature toughness, comprising:

on a steel slab containing, in mass%,
C: 0.010 to 0.080%,
Si: 0.01 to 0.50%,
Mn: 1.2 to 2.8%,
S: 0.0001 to 0.0050%,
Ti: 0.003 to 0.030%,
B: 0.0003 to 0.005%,
N: 0.0010 to 0.008%,
O: 0.0001 to 0.0080%,
one or more of Cr, Cu, and Ni,
P: limited to 0.050% or less,
Al: limited to 0.020% or less,
Mo: limited to 0.03% or less,
a Ceq obtained by (Expression 1) below of 0.30 to 0.53 and a Pcm obtained by (Expression 2) below of 0.10 to 0.20, wherein
the steel slab optionally further contains one or two or more of, in mass%,
W: 0.01 to 0.50%,
V: 0.010 to 0.100%,
Nb: 0.001 to 0.200%,
Zr: 0.0001 to 0.0500%,
Ta: 0.0001 to 0.0500%,
Mg: 0.0001 to 0.0100%,
Ca: 0.0001 to 0.0050%,
REM: 0.0001 to 0.0050%,
Y: 0.0001 to 0.0050%,
Hf: 0.0001 to 0.0050%, and
Re: 0.0001 to 0.0050%,

the Ceq is obtained by (Expression 1') below in place of (Expression 1) above, and
the Pcm is obtained by (Expression 2') below in place of (Expression 2).

$$\text{Ceq} = \text{C} + \text{Mn}/6 + (\text{Ni} + \text{Cu})/15 + (\text{Cr} + \text{Mo} + \text{V})/5 \cdots \text{(Expression 1')}$$

$$\text{Pcm} = \text{C} + \text{Si}/30 + (\text{Mn} + \text{Cu} + \text{Cr})/20 + \text{Ni}/60 + \text{Mo}/15 + \text{V}/10 + 5\text{B} \cdots$$

$$\text{(Expression 2')}$$

In (Expression 1') and (Expression 2') above, C, Si, Mn, Ni, Cu, Cr, Mo, V, and B denote the contents of the respective elements [mass%]. Ni, Cu, Cr, and Mo are calculated as 0 when the respective contents are 0%. V is calculated as 0 when the content is 0% and the content is less than 0.010 mass%,
and
a balance being composed of iron and inevitable impurities,
performing heating to 950°C or higher; performing a hot rolling step at $Ar_3$ or higher;

performing cooling at an average cooling rate of less than 10°C/s; and then performing accelerated cooling at a cooling rate of 10°C/s or more down to a temperature of Bs or lower obtained by (Expression 4) below from a-temperature of $Ar_3$ - 100°C to $A_{13}$ - 10°C.

$$Ceq = C + Mn/6 + (Ni + Cu)/15 + (Cr + Mo)/5 \cdots \text{(Expression 1)}$$

$$Pcm = C + Si/30 + (Mn + Cu + Cr)/20 + Ni/60 + Mo/15 + 5B \cdots \text{(Expression 2)}$$

$$Bs\ (°C) = 830 - 270C - 90Mn - 37Ni - 70Cr - 83Mo \cdots \text{(Expression 4)}$$

In (Expression 1), (Expression 2), and (Expression 4) above, C, Si, Mn, Ni, Cu, Cr, Mo, and B denote the contents of the respective elements [mass%]. Ni, Cu, Cr, and Mo are calculated as 0 when the respective contents are 0%.

**10.** The manufacturing method of the high-strength steel plate excellent in deformability and low-temperature toughness according to claim 9, wherein
in the hot rolling step, non-recrystallized $\gamma$ region rolling at a rolling start temperature set to $Ar_3$ to $Ar_3$ + 100°C and at a reduction ratio set to 1.5 or more is performed.

**Patentansprüche**

**1.** Eine hochfeste Stahlplatte mit hervorragender Verformbarkeit und Tieftemperaturzähigkeit, umfassend:

in Massen-%,
C: 0,010 bis 0,080%;
Si: 0,01 bis 0,50%;
Mn: 1,2 bis 2,8 %;
S: 0,0001 bis 0,0050%;
Ti: 0,003 bis 0,030%;
B: 0,0003 bis 0,005%;
N: 0,0010 bis 0,008%;
O: 0,0001 bis 0,0080%;
eines oder mehrere aus Cr, Cu, und Ni;
P: begrenzt auf 0,050% oder weniger;
Al: begrenzt auf 0,020% oder weniger;
Mo: begrenzt auf 0,03% oder weniger;
ein CÄq, erhalten durch nachstehenden (Ausdruck 1), von 0,30 bis 0,53; und ein Pcm, erhalten durch nachstehenden (Ausdruck 2), von 0,10 bis 0,20; und
einen Rest, der aus Eisen und unvermeidbaren Verunreinigungen zusammengesetzt ist; wobei
eine Metallstruktur 27 bis 90%, ausgedrückt als Flächenverhältnis, an polygonalem Ferrit und eine Hartphase, zusammengesetzt aus Bainit und/oder Martensit, als deren Rest enthält.

$$CÄq = C + Mn/6 + (Ni + Cu)/15 + (Cr + Mo)/5 \ldots \text{(Ausdruck 1)}$$

$$Pcm = C + Si/30 + (Mn + Cu + Cr)/20 + Ni/60 + Mo/15 + 5B \ldots \text{(Ausdruck 2)}$$

In vorstehendem (Ausdruck 1) und (Ausdruck 2) bezeichnen C, Si, Mn, Ni, Cu, Cr, Mo und B die Gehalte der jeweiligen Elemente [Massen-%]. Ni, Cu, Cr und Mo werden als 0 berechnet, wenn die jeweiligen Gehalte 0% betragen, wobei

die hochfeste Stahlplatte mit hervorragender Verformbarkeit und Tieftemperaturzähigkeit gegebenenfalls weiter:

eines oder zwei oder mehrere aus, in Massen-%,
W: 0,01 bis 0,50%;
V: 0,010 bis 0,100%;
Nb: 0,001 bis 0,200%;
Zr: 0,0001 bis 0,0500%;
Ta: 0,0001 bis 0,0500%;
Mg: 0,0001 bis 0,0100%;
Ca: 0,0001 bis 0,0050%;
Seltenerdmetalle: 0,0001 bis 0,0050%;
Y: 0,0001 bis 0,0050%;
Hf: 0,0001 bis 0,0050%; und
Re: 0,0001 bis 0,0050% umfasst; wobei

das CÄq durch nachstehenden (Ausdruck 1') anstelle von vorstehendem (Ausdruck 1) erhalten wird und das Pcm durch nachstehenden (Ausdruck 2') anstelle von (Ausdruck 2) erhalten wird.

$$CÄq = C + Mn/6 + (Ni + Cu)/15 + (Cr + Mo + V)/5 \ldots (\text{Ausdruck 1'})$$

$$Pcm = C + Si/30 + (Mn + Cu + Cr)/20 + Ni/60 + Mo/15 + V/10 + 5B \ldots (\text{Ausdruck 2'})$$

In vorstehendem (Ausdruck 1') und (Ausdruck 2') bezeichnen C, Si, Mn, Ni, Cu, Cr, Mo, V und B die Gehalte der jeweiligen Elemente [Massen-%]. Ni, Cu, Cr und Mo werden als 0 berechnet, wenn die jeweiligen Gehalte 0% betragen. V wird als 0 berechnet, wenn der Gehalt 0% beträgt und der Gehalt weniger als 0,010 Massen-% beträgt.

2. Die hochfeste Stahlplatte mit hervorragender Verformbarkeit und Tieftemperaturzähigkeit nach Anspruch 1, wobei in Massen-%, der Gehalt an C 0,010 bis 0,060% beträgt und der Gehalt an Al 0,008% oder weniger beträgt und eine $\gamma/\alpha$-Umwandlungsstarttemperatur in einer Wärmeeinflusszone, die durch nachstehenden (Ausdruck 3) erhalten wird, 500 bis 600°C beträgt.

$$\gamma/\alpha\text{-Umwandlungsstarttemperatur} = -2500\,CÄq^2 + 1560\,CÄq + 370 \ldots (\text{Ausdruck 3}).$$

3. Ein hochfestes Stahlrohr mit hervorragender Verformbarkeit und Niedertemperaturzähigkeit, bei dem es sich um ein Stahlrohr handelt, das aus einem zu einer Rohrform geformten Grundstahlplatte erhalten wurde und verschweißt wurde, wobei
die Grundstahlplatte die Stahlplatte nach Anspruch 1 oder 2 ist.

4. Das hochfeste Stahlrohr mit hervorragender Verformbarkeit und Tieftemperaturzähigkeit nach Anspruch 3, wobei bei der Stahlgrundplatte, in Massen-%, der Gehalt an C 0,010 bis 0,060% beträgt und der Gehalt an A1 0,008% oder weniger beträgt,
eine $\gamma/\alpha$-Umwandlungsstarttemperatur in einer Wärmeeinflusszone, die durch nachstehenden (Ausdruck 3) erhalten wird, 500 bis 600°C beträgt und
intragranulär umgewandelte Strukturen in einem vorherigen $\gamma$-Korn in der Wärmeeinflusszone enthalten sind.

$$\gamma/\alpha\text{-Umwandlungsstarttemperatur} = -2500\,CÄq^2 + 1560\,CÄq + 370 \ldots (\text{Ausdruck 3}).$$

5. Das hochfeste Stahlrohr mit hervorragender Verformbarkeit und Tieftemperaturzähigkeit nach Anspruch 4, wobei ein Martensit-Austenit-Bestandteil in der Wärmeeinflusszone 2,5% oder weniger, ausgedrückt als Flächenanteil, beträgt.

6. Das hochfeste Stahlrohr mit hervorragender Verformbarkeit und Tieftemperaturzähigkeit nach Anspruch 4, wobei eine hochwinklige Korngröße einer Metallstruktur in der Wärmeeinflusszone 80 $\mu$m oder weniger beträgt.

**7.** Das hochfeste Stahlrohr mit hervorragender Verformbarkeit und Tieftemperaturzähigkeit nach Anspruch 3 oder 4, wobei
eine Plattendicke der Grundstahlplatte 20 bis 40 mm beträgt.

**8.** Das hochfeste Stahlrohr mit hervorragender Verformbarkeit und Tieftemperaturzähigkeit nach Anspruch 3 oder 4, wobei
eine Zugfestigkeit der Grundstahlplatte 500 bis 800 MPa beträgt, wenn die Umfangsrichtung des Stahlrohres auf die Zugrichtung eingestellt ist.

**9.** Ein Herstellungsverfahren für eine hochfeste Stahlplatte mit hervorragender Verformbarkeit und Tieftemperaturzähigkeit, umfassend:

an einer Stahlbramme, enthaltend, in Massen-%,
C: 0,010 bis 0,080%,
Si: 0,01 bis 0,50%,
Mn: 1,2 bis 2,8%,
S: 0,0001 bis 0,0050%,
Ti: 0,003 bis 0,030%,
B: 0,0003 bis 0,005%,
N: 0,0010 bis 0,008%,
O: 0,0001 bis 0,0080%,
eines oder mehrere aus Cr, Cu, und Ni,
P: begrenzt auf 0,050% oder weniger,
Al: begrenzt auf 0,020% oder weniger,
Mo: begrenzt auf 0,03% oder weniger,
ein CÄq, erhalten durch nachstehenden (Ausdruck 1), von 0,30 bis 0,53 und ein Pcm, erhalten durch nachstehenden (Ausdruck 2), von 0,10 bis 0,20, wobei die Stahlbramme gegebenenfalls weiter eines oder zwei oder mehrere aus, in Massen-%,
W: 0,01 bis 0,50%,
V: 0,010 bis 0,100%,
Nb: 0,001 bis 0,200%,
Zr: 0,0001 bis 0,0500%,
Ta: 0,0001 bis 0,0500%,
Mg: 0,0001 bis 0,0100%,
Ca: 0,0001 bis 0,0050%,
Seltenerdmetalle: 0,0001 bis 0,0050%,
Y: 0,0001 bis 0,0050%,
Hf: 0,0001 bis 0,0050% und
Re: 0,0001 bis 0,0050% enthält,
das CÄq durch nachstehenden (Ausdruck 1') anstelle von vorstehendem (Ausdruck 1) erhalten wird und
das Pcm durch nachstehenden (Ausdruck 2') anstelle von (Ausdruck 2) erhalten wird.

$$\text{CÄq} = C + Mn/6 + (Ni + Cu)/15 + (Cr + Mo + V)/5 \ ... \ (\text{Ausdruck 1'})$$

$$\text{Pcm} = C + Si/30 + (Mn + Cu + Cr)/20 + Ni/60 + Mo/15 + V/10 + 5B \ ... \ (\text{Ausdruck 2'})$$

In vorstehendem (Ausdruck 1') und (Ausdruck 2') bezeichnen C, Si, Mn, Ni, Cu, Cr, Mo, V und B die Gehalte der jeweiligen Elemente [Massen-%]. Ni, Cu, Cr und Mo werden als 0 berechnet, wenn die jeweiligen Gehalte 0% betragen. V wird als 0 berechnet, wenn der Gehalt 0% beträgt und der Gehalt weniger als 0,010 Massen-% beträgt,
und
einen Rest, der aus Eisen und unvermeidbaren Verunreinigungen zusammengesetzt ist, Durchführen von Erwärmen auf 950°C oder höher; Durchführen eines Warmwalzschritts bei Ar$_3$ oder höher; Durchführen von Abkühlen bei einer mittleren Abkühlgeschwindigkeit von weniger als 10°C/s; und dann Durchführen von beschleunigtem Herabkühlen bei einer Abkühlgeschwindigkeit von 10°C/s oder mehr auf eine Temperatur von Bs oder niedriger, erhalten durch nachstehenden (Ausdruck 4), von einer Temperatur von Ar$_3$ - 100°C bis Ar$_3$ - 10°C.

$$CÄq = C + Mn/6 + (Ni + Cu)/15 + (Cr + Mo)/5 \; ... \; (Ausdruck \; 1)$$

$$Pcm = C + Si/30 + (Mn + Cu + Cr)/20 + Ni/60 + Mo/15 + 5B \; ... \; (Ausdruck \; 2)$$

$$Bs \; (°C) = 830 - 270C - 90Mn - 37Ni - 70Cr - 83Mo \; ... \; (Ausdruck \; 4)$$

In vorstehendem (Ausdruck 1), (Ausdruck 2) und (Ausdruck 4) bezeichnen C, Si, Mn, Ni, Cu, Cr, Mo und B die Gehalte der jeweiligen Elemente [Massen-%]. Ni, Cu, Cr und Mo werden als 0 berechnet, wenn die jeweiligen Gehalte 0% betragen.

10. Das Herstellungsverfahren für die hochfeste Stahlplatte mit hervorragender Verformbarkeit und Tieftemperaturzähigkeit nach Anspruch 9, wobei in dem Warmwalzschritt Walzen des nicht-rekristallisierten γ-Bereichs bei einer auf Ar$_3$ bis Ar$_3$ + 100°C eingestellten Walzstarttemperatur und bei einem auf 1,5 oder mehr eingestellten Reduktionsverhältnis durchgeführt wird.

**Revendications**

1. Plaque d'acier de résistance élevée d'excellentes aptitude à la déformation et ténacité à basse température, comprenant :

en % en masse,
C: 0,010 à 0,080 % ;
Si : 0,01 à 0,50 % ;
Mn : 1,2 à 2,8 % ;
S: 0,0001 à 0,0050 % ;
Ti : 0,003 à 0,030 % ;
B: 0,0003 à 0,005 % ;
N : 0,0010 à 0,008 % ;
O : 0,0001 à 0,0080 % ;
un ou plusieurs de Cr, Cu, et Ni ;
P : limité à 0,050 % ou inférieur ;
Al : limité à 0,020 % ou inférieur ;
Mo : limité à 0,03 % ou inférieur ;
un Ceq obtenu par (Expression 1) ci-dessous de 0,30 à 0,53 ; et un Pcm obtenu par (Expression 2) ci-dessous de 0,10 à 0,20 ; et
un reste étant constitué de fer et d'impuretés inévitables ; dans laquelle

une structure de métal contient de 27 à 90 % en rapport de surface de ferrite polygonale et une phase dure constituée d'une ou des deux de bainite et martensite comme son reste.

$$Ceq = C + Mn/6 + (Ni + Cu)/15 + (Cr + Mo)/5 \; ... \; (Expression \; 1)$$

$$Pcm = C + Si/30 + (Mn + Cu + Cr)/20 + Ni/60 + Mo/15 + 5B \; ... \; (Expression \; 2)$$

dans (Expression 1) et (Expression 2) ci-dessus, C, Si, Mn, Ni, Cu, Cr, Mo, et B indiquent les teneurs des éléments respectifs [% en masse]. Ni, Cu, Cr, et Mo sont calculés comme étant égaux à 0 lorsque les teneurs respectives sont de 0 %, dans laquelle
la plaque d'acier de résistance élevée d'excellentes aptitude à la déformation et ténacité à basse température contient de plus éventuellement :

un ou deux ou plusieurs de, en % en masse,
W : 0,01 à 0,50 % ;
V : 0,010 à 0,100 % ;
Nb : 0,001 à 0,200 % ;
Zr : 0,0001 à 0,0500 % ;
Ta : 0,0001 à 0,0500 % ;
Mg : 0,0001 à 0,0100 % ;
Ca: 0,0001 à 0,0050 % ;
REM: 0,0001 à 0,0050 % ;
Y : 0,0001 à 0,0050 % ;
Hf : 0,0001 à 0,0050 % ; et
Re : 0,0001 à 0,0050 % ; dans laquelle

le Ceq est obtenu par (Expression 1') ci-dessous à la place de (Expression 1) ci-dessus, et
le Pcm est obtenu par (Expression 2') ci-dessous à la place de (Expression 2).

$$Ceq = C + Mn/6 + (Ni + Cu)/15 + (Cr + Mo + V)/5 \ldots \text{(Expression 1')}$$

$$Pcm = C + Si/30 + (Mn + Cu + Cr)/20 + Ni/60 + Mo/15 + V/10 + 5B \ldots \text{(Expression 2')}$$

dans (Expression 1') et (Expression 2') ci-dessus, C, Si, Mn, Ni, Cu, Cr, Mo, V, et B indiquent les teneurs des éléments respectifs [% en masse]. Ni, Cu, Cr, et Mo sont calculés comme étant égaux à 0 lorsque les teneurs respectives sont de 0 %. V est calculé comme étant égal à 0 lorsque la teneur est de 0 % et la teneur est inférieure à 0,010 % en masse.

2.  Plaque d'acier de résistance élevée d'excellentes aptitude à la déformation et ténacité à basse température selon la revendication 1, dans laquelle
en % en masse, la teneur en C est de 0,010 à 0,060 % et la teneur en Al est de 0,008 % ou inférieure, et une température de début de transformation $\gamma/\alpha$ dans une zone affectée par la chaleur qui est obtenue par (Expression 3) ci-dessous est de 500 à 600°C.

$$\text{Température de début de transformation } \gamma/\alpha = -2\,500Ceq^2 + 1\,560Ceq + 370 \ldots \text{(Expression 3)}.$$

3.  Tuyau en acier de résistance élevée d'excellentes aptitude à la déformation et ténacité à basse température étant un tuyau en acier obtenu à partir d'une plaque d'acier de base façonnée en une forme de tuyau et étant soudée, dans lequel
la plaque d'acier de base est la plaque d'acier selon la revendication 1 ou 2.

4.  Tuyau en acier de résistance élevée d'excellentes aptitude à la déformation et ténacité à basse température selon la revendication 3, dans lequel
de la plaque d'acier de base, en % en masse, la teneur en C est de 0,010 à 0,060 % et la teneur en Al est de 0,008 % ou inférieure,
une température de début de transformation $\gamma/\alpha$ dans une zone affectée par la chaleur qui est obtenue par (Expression 3) ci-dessous est de 500 à 600°C, et
des structures transformées intragranulaires sont contenues dans un grain $\gamma$ préalable dans la zone affectée par la chaleur.

$$\text{Température de début de transformation } \gamma/\alpha = -2\,500Ceq^2 + 1\,560Ceq + 370 \ldots \text{(Expression 3)}.$$

**5.** Tuyau en acier de résistance élevée d'excellentes aptitude à la déformation et ténacité à faible température selon la revendication 4, dans lequel
un constituant de martensite-austénite dans la zone affectée par la chaleur est de 2,5 % ou inférieur dans une fraction de surface.

**6.** Tuyau en acier de résistance élevée d'excellentes aptitude à la déformation et ténacité à faible température selon la revendication 4, dans lequel
une taille de grain d'angle élevé d'une structure de métal dans la zone affectée par la chaleur est de 80 μm ou inférieure.

**7.** Tuyau en acier de résistance élevée d'excellentes aptitude à la déformation et ténacité à faible température selon la revendication 3 ou 4, dans lequel
une épaisseur de la plaque d'acier de base est de 20 à 40 mm.

**8.** Tuyau en acier de résistance élevée d'excellentes aptitude à la déformation et ténacité à basse température selon la revendication 3 ou 4, dans lequel
une résistance à la traction de la plaque d'acier de base est de 500 à 800 MPa lorsque la direction de circonférence du tuyau en acier est fixée par rapport à la direction de traction.

**9.** Procédé de fabrication d'une plaque d'acier de résistance élevée d'excellentes aptitude à la déformation et ténacité à basse température, comprenant :

sur une brame d'acier contenant, en % en masse,
C : 0,010 à 0,080 % ;
Si : 0,01 à 0,50 % ;
Mn : 1,2 à 2,8 % ;
S : 0,0001 à 0,0050 % ;
Ti : 0,003 à 0,030 % ;
B : 0,0003 à 0,005 % ;
N : 0,0010 à 0,008 % ;
O : 0,0001 à 0,0080 % ;
un ou plusieurs de Cr, Cu, et Ni ;
P : limité à 0,050 % ou inférieur ;
Al : limité à 0,020 % ou inférieur ;
Mo : limité à 0,03 % ou inférieur ;
un Ceq obtenu par (Expression 1) ci-dessous de 0,30 à 0,53 ; et un Pcm obtenu par (Expression 2) ci-dessous de 0,10 à 0,20, dans lequel
la brame d'acier contient de plus éventuellement un ou deux ou plusieurs de, en % en masse,
W : 0,01 à 0,50 % ;
V : 0,010 à 0,100 % ;
Nb : 0,001 à 0,200 % ;
Zr : 0,0001 à 0,0500 % ;
Ta : 0,0001 à 0,0500 % ;
Mg : 0,0001 à 0,0100 % ;
Ca : 0,0001 à 0,0050 % ;
REM: 0,0001 à 0,0050 % ;
Y : 0,0001 à 0,0050 % ;
Hf : 0,0001 à 0,0050 % ; et
Re : 0,0001 à 0,0050 % ;

le Ceq est obtenu par (Expression 1') ci-dessous à la place de (Expression 1) ci-dessus, et
le Pcm est obtenu par (Expression 2') ci-dessous à la place de (Expression 2).

$$Ceq = C + Mn/6 + (Ni + Cu)/15 + (Cr + Mo + V)/5 \ldots \text{(Expression 1')}$$

$$Pcm = C + Si/30 + (Mn + Cu + Cr)/20 + Ni/60 + Mo/15 + V/10 + 5B \ldots$$ (Expression 2')

dans (Expression 1') et (Expression 2') ci-dessus, C, Si, Mn, Ni, Cu, Cr, Mo, V, et B indiquent les teneurs des éléments respectifs [% en masse]. Ni, Cu, Cr, et Mo sont calculés comme étant égaux à 0 lorsque les teneurs respectives sont de 0 %. V est calculé comme étant égal à 0 lorsque la teneur est de 0 % et la teneur est inférieure à 0,010 % en masse,
et
un reste étant constitué de fer et d'impuretés inévitables,
la réalisation d'un chauffage à 950°C ou supérieur ; la réalisation d'une étape de laminage à chaud à $Ar_3$ ou supérieur ;
la réalisation d'un refroidissement à une vitesse de refroidissement moyenne inférieure à 10°C/s ; et puis la réalisation d'un refroidissement accéléré à une vitesse de refroidissement de 10°C/s ou supérieure jusqu'à une température de Bs ou inférieure obtenue par (Expression 4) ci-dessous à partir d'une température de $Ar_3$-100°C à $Ar_3$-10°C.

$$Ceq = C + Mn/6 + (Ni + Cu)/15 + (Cr + Mo)/5 \quad \ldots \text{(Expression 1)}$$

$$Pcm = C + Si/30 + (Mn + Cu + Cr)/20 + Ni/60 + Mo/15 + 5B \ldots$$ (Expression 2)

$$Bs(°C) = 830 - 270C - 90Mn - 37Ni - 70Cr - 83Mo \quad \ldots \text{(Expression 4)}$$

dans (Expression 1), (Expression 2) et (Expression 4) ci-dessus, C, Si, Mn, Ni, Cu, Cr, Mo, et B indiquent les teneurs des éléments respectifs [% en masse]. Ni, Cu, Cr, et Mo sont calculés comme étant égaux à 0 lorsque les teneurs respectives sont de 0 %.

10. Procédé de fabrication de la plaque d'acier de résistance élevée d'excellentes aptitude à la déformation et ténacité à basse température selon la revendication 9, dans lequel
dans l'étape de laminage à chaud, un laminage de région γ non-recristallisée à une température de début de laminage fixée à de $Ar_3$ à $Ar_3$+100°C et à un taux de réduction fixé à 1,5 ou supérieur est réalisé.

**FIG.1**

**FIG.2**

# FIG.3

# FIG.4

FIG.5

FIG.6

FIG.7

## FIG.8

## FIG.9

**FIG.10**

( a )                    ( b )

## FIG.11

100um

## FIG.12

100um

## FIG.13

M-A 2.2%

## FIG.14

M-A 3.0%

**EP 2 799 567 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003293078 A
- JP 2003306749 A
- JP 2005146407 A
- JP 2004131799 A
- JP 2009270197 A
- JP 3602471 B
- JP 2000345239 A
- JP HEI08325635 B
- JP 2001355039 A
- JP 2003138340 A
- JP 2007239049 A
- JP 2008163456 A
- JP 2009149917 A
- WO 2011030768 A
- EP 2093302 A